# EUROPÄISCHE PATENTSCHRIFT

(11) **EP 2 878 941 B1**
(45) Veröffentlichungstag und Bekanntmachung des Hinweises auf die Patenterteilung: **05.05.2021**
(21) Anmeldenummer: 13195342.4
(22) Anmeldetag: 02.12.2013
(51) Int. Cl.: G01M 99/00, B65B 17/02, B65D 21/02, B65B 35/46

(54) **Verfahren und Vorrichtung zur Prüfung von Verklebungen zwischen Artikeln eines Gebindes**
Method and device for testing adhesive joints between articles of a container
Procédé et dispositif de contrôle des collages entre des articles d'un conteneur

(43) Veröffentlichungstag der Anmeldung: 03.06.2015
(73) Patentinhaber: Krones Aktiengesellschaft, 93073 Neutraubling (DE)
(72) Erfinder: Kollmuss, Manuel, 93073 Neutraubling (DE); Palumbo, Pino-Giuseppe, 93073 Neutraubling (DE); Winzinger, Frank, 93073 Neutraubling (DE)
(74) Vertreter: Benninger, Johannes

(56) Entgegenhaltungen:
- DE-A1-102011 107 265
- DE-U1- 20 310 721
- DE-U1-202010 009 972
- US-A- 5 331 038
- US-B1- 7 048 817
- Manfred Rasche: "Der Zugscherversuch in der Klebetechnik", Adh?sion, vol. 11, 1 January 1990 (1990-01-01), pages 36-43, XP055326040,

## Beschreibung

Die vorliegende Erfindung betrifft ein Verfahren zur Prüfung der Verklebungen zwischen den Artikeln eines Gebindes aus durch Verklebungen miteinander verbundenen Artikeln gemäß den Merkmalen des Oberbegriffs des Anspruchs 1, sowie eine Vorrichtung zu dessen Durchführung gemäß den Merkmalen des Oberbegriffs des Anspruchs 6.

Gebinde stellen eine effektive Art dar, den gleichzeitigen Umgang mit mehreren Artikeln zu ermöglichen, beispielsweise um den Transport mehrerer Artikel zugleich zu erleichtern.

Die Herstellung von Gebinden ist meist unumgänglich, da solche Gebinde die häufigste Variante von Verkaufseinheiten für diverse Artikel, wie beispielsweise Getränkebehälter und Flaschen aus PET-Kunststoff bilden.

Um ein Gebinde zu erzeugen, ist bekannt, eine auch als Gebindegröße bezeichnete Anzahl A von Artikeln, die in dem Gebinde zusammengefasst sein sollen, zunächst entsprechend einer gewünschten Anordnung innerhalb des Gebindes zu gruppieren. So können bspw. Getränkebehälter zu Gebinden von vier, sechs oder mehr Behältern zusammengefasst werden. Anschließend wird die so hergestellte Artikelgruppe entsprechend der Ausführung des Gebindes zusammengehalten.

Die Artikel eines Gebindes können beispielsweise in einer Reihe geradlinig hintereinander angeordnet sein, oder die Artikel eines Gebindes können in rechtwinklig zueinander verlaufenden Reihen und Zeilen regelmäßig angeordnet sein.

Um Artikel mit abschnittsweise zylindrischen oder annähernd zylindrischen Formen wie bspw. Getränkedosen oder Getränkeflaschen, möglichst platzsparend und mit möglichst geringer Relativbeweglichkeit zueinander zusammenzufassen, ist außerdem bekannt, einen sog. Waben oder Kugelverbund zu bilden, der auch als genestete Anordnung bezeichnet wird. Hierbei stehen die in benachbarten Reihen im Gebinde angeordneten Artikel jeweils derart versetzt zueinander, dass die zwischen den Behältern gebildeten Lücken möglichst gering ausfallen. Die Zeilen verlaufen dabei nicht im rechten Winkel zu den Reihen, sondern diagonal. Die Zeilen können dabei gerade verlaufen oder V-förmig abgewinkelt, oder Zickzackförmig abgewinkelt schräg zu den Reihen verlaufen. Eine solche Waben- oder Kugelanordnung stellt einen Verbund einer gegebenen Anzahl von Artikeln mit der geringstmöglichen Grundfläche dar.

Es stehen verschiedene Möglichkeiten zur Verfügung, die Artikel einer Artikelgruppe zu einem Gebinde zusammenzuhalten. Eine erste Möglichkeit stellt die Verwendung einer Umfassung dar, welche die Artikel des Gebindes an der Peripherie der Artikelgruppe umgibt. Die Artikel eines Gebindes können beispielsweise vermittels einer Umfassung in Form einer Umreifung, einer Umverpackung, wie etwa einer Umwickelung, einem Schrumpfschlauch oder eines Kartons, einer Kartonschachtel oder eines Tragegestells zusammengehalten werden, um nur einige denkbare Ausführungen zu nennen. Gleichzeitig mit dem Zusammenhalten kann vermittels einer Umfassung auch ein Verpacken des Gebindes erfolgen. So können bspw. Getränkebehälter mittels Schrumpffolienumhüllungen, Umwicklungen oder eines Kartons zu Gebinden nicht nur zusammengehalten, sondern gleichzeitig auch verpackt werden.

An der Umfassung kann ein Tragegriff oder eine oder mehrere Eingriffsmöglichkeiten vorgesehen sein, um das fertige Gebinde mit einer Hand leichter fassen zu können.

Darüber hinaus sind Gebinde bekannt, die ohne eine Umfassung auskommen. Bei derartigen Gebinden sind die Artikel selbst unmittelbar miteinander verbunden, beispielsweise durch lösbare Rastverbindungen, Sollbruchstellen, wie beispielsweise Perforationen, oder vermittels Klebeverbindungen der Artikel untereinander.

Durch DE 23 31 193 ist ein Gebinde aus in rechtwinklig zueinander verlaufenden Reihen und Zeilen angeordneten Artikeln bekannt, dessen Artikel durch Verklebungen unmittelbar miteinander verbunden sind. Das Gebinde ist frei von einer Umfassung ausgebildet. Die Verklebungen sind durch auf den in der Gebindeanordnung zusammenstoßenden Mantelflächen der Artikel angebrachte Klebepunkte ausgebildet.

Durch DE 203 10 721 U1 ist ein Gebinde aus durch Verklebungen unmittelbar miteinander verbundenen Artikeln in genesteter Anordnung bekannt. Das Gebinde ist frei von einer Umfassung ausgebildet. Die Verklebungen sind durch auf den in der Gebindeanordnung zusammenstoßenden Mantelflächen der Artikel angebrachte Klebestreifen ausgebildet.

Durch DE 10 2009 044 271 A1 ist bekannt, zu einem Gebinde zusammengestellte PET-Behälter an in der Gebindeanordnung zusammenstoßenden Mantelflächen miteinander zu verkleben.

Ein Nachteil von beispielsweise frei von einer Umfassung ausgeführten Gebinden, dessen Artikel durch Verklebungen unmittelbar miteinander verbunden sind, ist, dass nur eine oder wenige mangelhaft ausgeführte Verklebungen innerhalb eines Gebindes zu einem unbeabsichtigten Auseinanderfallen des Gebindes bei einem sich an dessen Herstellung anschließenden gewöhnlichen Umgang mit dem Gebinde führen können, der für ein Gebinde mit einwandfrei hergestellten Verklebungen ansonsten folgenfrei bliebe. Ein solches Auseinanderfallen ist dann besonders schmerzhaft, wenn es sich auch auf einwandfrei hergestellte Gebinde auswirkt. Werden die hergestellten Gebinde zu deren weiterem Umgang beispielsweise palettiert, kann ein Auseinanderfallen eines Gebindes während des Palettierens beispielsweise während des Aufstapelns zu einem Stapel oder bei einer Umwicklung eines fertig gestellten Stapels einen Totalverlust aller gemeinsam palettierter Gebinde nach sich ziehen. Werden die Artikel eines Gebindes zunächst durch Verklebungen unmittelbar miteinander verbunden und sieht der darauffolgende Umgang mit dem Gebinde dann vor, eine Umfassung in Form beispielsweise einer Umreifung vorzusehen, kann ein Auseinanderfallen des Gebindes während des Anbringens der Umreifung zu einem kostspieligen Stillstand einer zur Herstellung der Gebinde vorgesehenen Anlage führen.

Durch DE 20 2010 009 972 U1 ist eine Einrichtung zur Prüfung von Kolli bekannt. Bei den Kolli handelt es sich um Trays mit auf diesen aufstehenden oder in diese eingebrachten Artikeln. Die Einrichtung ist in der Lage, vermittels einer auf ein Kollo und damit auf alle Artikel des Kollos gleichermaßen absetzbaren Deckplatte Druck in vertikaler Richtung auf das Kollo auszuüben. Ferner ist die Einrichtung in der Lage, die Deckplatte in horizontaler Richtung gegenüber einem Tragboden mit einer Horizontalkraft zu beaufschlagen. Mit der Einrichtung kann die Druckbelastbarkeit von Kollis in einem Stapel geprüft werden. Hierzu wird vermittels mehrerer auf die Deckplatte einwirkender Druckzylinder eine vorgegebene vertikale Druckkraft gleichmäßig auf das Kollo verteilt aufgebracht und die Verformung des Kollos in vertikaler Richtung durch eine Wegüberwachung der Druckzylinder erfasst. Mit der Einrichtung kann außerdem die Formstabilität von Kolli gegenüber zwischen der auf dem Tragboden aufliegenden Unterseite eines Kollos und der an der Deckplatte anliegenden Oberseite des Kollos einwirkenden Scherkräften geprüft werden. Hierzu wird vermittels mehrerer auf die Deckplatte einwirkender Druckzylinder zunächst eine vorgegebene Druckkraft gleichmäßig auf das Kollo verteilt aufgebracht und anschließend eine vorgegebene Horizontalkraft auf die mit der Druckkraft beaufschlagte Deckplatte ausgeübt. Die Verformung des Kollos in horizontaler Richtung durch eine Wegüberwachung der Deckplatte in horizontaler Richtung erfasst. Alternativ kann mit der Einrichtung die Formstabilität von Kollis gegenüber zwischen der auf dem Tragboden aufliegenden Unterseite eines Kollos und der der der Deckplatte zugewandten Oberseite des Kollos einwirkenden Scherkräften geprüft werden. Hierzu wird ein Teil der Deckplatte unter die Oberseite des Kollos abgesenkt und horizontal gegen das Kollo verfahren. Anschließend wird eine vorgegebene Horizontalkraft aufgebracht und die Verformung des Kollos in horizontaler Richtung durch eine Wegüberwachung der Deckplatte in horizontaler Richtung erfass. Die Überprüfung der Formstabilität des Gebindes in Längs- und in Querrichtung erfolgt vermittels der Einrichtung, indem ein in einer Richtung überprüftes Kollo der Einrichtung entnommen, um 90° gedreht und wieder in die Einrichtung eingebracht wird. Mittels der Einrichtung kann auch eine Prüfung der Kollidurchbiegung vorgenommen werden, wobei das einen Boden (Tray) umfassende Kolli angehoben wird, wodurch die auf dem Tray lastenden Artikeln dessen Boden durchbiegen.

Durch DE 10 2011 107 265 A1 ist bekannt, Klebegebinde herzustellen Die Dokumente US5331038 und US7048817 offenbaren andere Verfahren und Vorrichtungen zur Herstellung von Klebegebinden.

Eine Aufgabe der Erfindung ist, ein Verfahren und eine Vorrichtung zur Prüfung der Verklebungen zwischen den Artikeln eines Gebindes anzugeben, welches Gebinde bevorzugt frei von einer Umfassung ausgeführt ist, und dessen Artikel durch Verklebungen unmittelbar miteinander verbunden sind.

Die obige Aufgabe wird jeweils gelöst mit den Merkmalen der unabhängigen Ansprüche. Weitere vorteilhafte Ausgestaltungen werden durch die Unteransprüche beschrieben.

Ein erster Gegenstand der Erfindung betrifft demnach ein Verfahren zur Prüfung der Verklebungen zwischen den Artikeln eines Gebindes aus in mindestens einer Reihe und/oder mindestens einer Zeile zu mindestens zwei Artikeln unmittelbar miteinander durch Verklebungen verbundenen Artikeln. Die Artikel des Gebindes können:
- in einer Reihe oder in einer Zeile in Bezug beispielsweise auf eine Transportrichtung geradlinig hintereinander oder nebeneinander angeordnet sein, oder
- in rechtwinklig zueinander verlaufenden Reihen und Zeilen regelmäßig angeordnet sein, oder
- in zwei oder mehr parallelen Reihen beispielsweise zu jeweils zwei oder mehr Artikeln mit schräg hierzu verlaufenden Zeilen beispielsweise zu jeweils einer der Anzahl der Reihen entsprechenden Zahl von Artikeln genestet versetzt zueinander angeordnet sein.

Das fertige Gebinde ist bevorzugt frei von einer Umfassung ausgeführt. Ist das fertige Gebinde mit einer Umfassung ausgeführt, so findet eine Überprüfung der Verklebungen statt nachdem die Verklebungen zwischen den Artikeln hergestellt sind und bevor die Umfassung um die durch Verklebungen miteinander verbundenen Artikel des Gebindes herum angeordnet wird.

Eine Verklebung zwischen zwei Artikeln des Gebindes kann durch jeweils einen, zwei oder mehrere auf den in der Gebindeanordnung zusammenstoßenden Mantelflächen der Artikel angebrachte Klebepunkte eines Klebstoffs hergestellt sein.

Unter der Mantelfläche kann beispielsweise die äußere Oberfläche des Grundmaterials des Artikels (z.B. PET bei einer PET-Flasche), aber auch die äußere Oberfläche einer Schicht verstanden werden, welche das Grundmaterial des Artikels zumindest bereichsweise umgibt. Mögliche Schichten können beispielsweise aus Etiketten (Papier, Kunststoff), Aufdrucken (Tinte), Silizium oder dergleichen gebildet werden.

Bei einem Klebstoff im Sinne der Erfindung handelt es sich bevorzugt um ein oder mehrere Materialien oder Massen, mit denen eine Klebeverbindung zwischen Artikeln möglich ist, insbesondere zusammengesetzte, heterogene Komposite oder homogene Materialien oder Massen, die im flüssigen oder zähflüssigen Zustand aufgebracht, einen selbstklebenden Auftrag bilden und/oder unter Anwendung von Druck und/oder durch Energieeintrag und/oder nach einem Aushärten oder Vernetzen, beispielsweise nach oder unter einem Energieeintrag, eine Klebeverbindung bewirken. Klebstoffe im Sinne der Erfindung sind u.a. auch Mehrschichtmaterialien, z.B. solche aus wenigstens einem Trägermaterial, welches mit einem Material beschichtet ist, mit dem eine Verklebung zwischen Artikeln möglich ist, also mindestens zweiseitig haftend- und/oder klebend aktiv sind. Solche Haft- oder Klebemittel können als Pads bezeichnet werden. Der Klebstoff ist bevorzugt derart gewählt, dass die unmittelbar miteinander durch unter Verwendung des Klebstoffs hergestellter Verklebungen verbundenen Artikel händisch und zerstörungsfrei aus dem Gebinde lösbar bzw. voneinander trennbar sind. Denkbar ist, dass der Klebstoff zunächst flüssig oder pastös vorliegt. Denkbar ist beispielsweise ein bei seinem Auftragen niedrigviskoser, UV-aushärtender Klebstoff. Geeignet ist auch ein Heißleim, der erst abkühlt, und so seine Klebeigenschaften erreicht, wenn die Artikel des Gebindes zusammengeführt und an ihren beispielsweise mit Klebepunkten versehenen, in der Gebindeanordnung zusammenstoßenden Mantelflächen der Artikel gegeneinander gepresst und gehalten werden, bis der Klebstoff hinreichend ausgehärtet ist. Ein UV-aushärtender Klebstoff ist auch vorteilhaft hinsichtlich der besonders leichten Einstellung seiner gewünschten Eigenschaften. Eine entsprechende Aushärtstation bzw. eine Aushärtstrecke ist in sinnvoller Weise in einer Transport- oder Förderrichtung der fertig hergestellten Gebinde gesehen stromauf eines Streckenabschnitts angeordnet, entlang dem die Prüfung der Verklebungen auf deren ordnungsgemäße Herstellung stattfindet. Eine Aushärtstation kann beispielsweise eine Bestrahlung mit elektromagnetischen Wellen geeigneter, beispielsweise infraroter (IR) oder ultravioletter (UV) Wellenlänge sein.

Bevorzugt können die Verklebungen durch einen Klebstoff hergestellt werden, der nach dem Aufbringen auf miteinander zu verbindende Verbindungsstellen der Artikel untereinander zunächst aushärtet, beispielsweise beschleunigt unter Einwirkung elektromagnetischer Strahlung, wie beispielsweise langwelliger Wärmestrahlung oder kurzwelliger Strahlung (UV-Strahlung; UV-Licht). Dadurch kann die Aushärtung des Klebstoffs der Klebepunkte an ausgewählten Verbindungsstellen gezielt durch entsprechende Einwirkung elektromagnetischer Strahlung gesteuert werden, wohingegen der Klebstoff von Klebepunkten an Verbindungsstellen, an denen erst zu einem späteren Zeitpunkt im laufenden Verfahren eine Verbindung bzw. Verklebung mit einem anderen Artikel hergestellt wird, zunächst frei von einer Einwirkung bleibt und dadurch noch nicht aushärtet. Der Klebstoff der Klebepunkte an den Verbindungsstellen, an denen erst zu einem späteren Zeitpunkt im laufenden Verfahren eine Verbindung bzw. Verklebung mit einem anderen Artikel hergestellt wird, erfährt bevorzugt erst dann eine Einwirkung der elektromagnetischen Strahlung, sobald ein Aushärten des Klebstoffs zur Herstellung einer Verklebung an der entsprechenden Verbindungsstelle im laufenden Verfahren vorgesehen ist. Diese Vorgehensweise ermöglicht es, grundsätzlich den Klebstoff zur Erzeugung der Klebepunkte an allen Verbindungsstellen gleichzeitig aufzubringen und eine zeitliche Steuerung dessen Aushärtens gezielt für jede Verbindungsstelle durch Einwirkung der elektromagnetischen Strahlung vorzunehmen.

Insbesondere ist es durch eine gesteuerte Aushärtung möglich, gezielt einzelne Klebepunkte im Hinblick auf ihre Festigkeit zu prüfen und erst danach die Aushärtung anderer im Gebinde befindliche Klebepunkte vorzunehmen.

Wichtig ist hervorzuheben, dass unter Aushärten des Klebstoffs im Sinne der Erfindung verstanden wird, dass der Klebstoff aus einem Zustand bei dessen Auftragen der Klebepunkte nach dem Aneinanderpressen in einen Zustand übergeht, bei dem er nach Aufhebung des Pressens und des Haltens in der Lage ist, die beim weiteren Umgang mit dem Zwischengebinde oder dem fertigen Gebinde auftretenden Belastungen durch zwischen den miteinander durch Verklebungen verbundenen Artikeln wirkende Kräfte und Momente zu ertragen. Je nach verwendetem Klebstoff kann dieser Zustand bereits auftreten, bevor der Klebstoff beispielsweise tatsächlich vollständig durchgehärtet ist.

In diesem Zusammenhang ist es ebenfalls wichtig hervorzuheben, dass ein Klebepunkt im Sinne der Erfindung keinesfalls im mathematisch-geometrischen Sinne zu verstehen ist, sondern es sich hierbei um ein gedankliches Hilfskonstrukt handelt, welches veranschaulichen soll, dass das Auftragen des Klebstoffs bevorzugt berührungsfrei und dabei besonders bevorzugt impulsartig oder zumindest innerhalb einer nur kurzen Zeitdauer erfolgt. Im Sinne der Erfindung umfasst der Ausdruck Klebepunkt damit zumindest am fertigen Gebinde sowohl einen punktförmigen, als auch linienförmigen, sowie ebenfalls flächigen Klebstoffauftrag und sogar einen sich hieraus ergebenden dreidimensionalen Klebstoffkörper bzw. Verbindungskörper aus Klebstoff an den Verbindungsstellen zwischen den Artikeln.

Nach der Herstellung der Verklebungen der Artikel des Gebindes untereinander sieht das Verfahren vor, miteinander durch mindestens eine Verklebung verbundene Artikel beispielsweise der selben Reihe oder der selben Zeile oder benachbarter Reihen und/oder Zeilen des Gebindes einzeln und/oder gruppenweise einer Krafteinwirkung in entgegengesetzten Richtungen auszusetzen. Die Krafteinwirkung in entgegengesetzten Richtungen erfolgt durch mindestens ein Kräftepaar, von welchem eine erste Kraft auf einen ersten Artikel miteinander durch eine Verklebung verbundener Artikel und ein zweite, der ersten Kraft entgegengerichtete Kraft auf einen zweiten Artikel miteinander durch eine Verklebung verbundener Artikel in derart entgegengesetzten Richtungen einwirkt, dass die Verklebung zwischen dem ersten und dem zweiten Artikel eine Zug- und/oder Scherbeanspruchung und/oder eine Momentenbeanspruchung erfährt. Die Krafteinwirkung in entgegengesetzten Richtungen findet dabei vorzugsweise innerhalb durch die Verklebungen bei gewöhnlichem Umgang mit dem Gebinde zu ertragenden Grenzen statt, wie sie beispielsweise beim Anheben und/oder Verschieben und/oder Absetzen des Gebindes auftreten. Darüber hinaus sieht das Verfahren vor, zumindest die Reaktion derjenigen Artikel des Gebindes auf die Krafteinwirkung in entgegengesetzten Richtungen bevorzugt sensorisch zu überwachen, welche jeweils momentan der Krafteinwirkung in entgegengesetzten Richtungen ausgesetzt sind.

Wird bei der Überwachung festgestellt, dass sich die einer Krafteinwirkung in entgegengesetzten Richtungen ausgesetzten Artikel gleich verhalten, so wird hieraus insbesondere auf eine ordnungsgemäß hergestellte Verklebung zwischen den betroffenen Artikeln rückgeschlossen. Wird bei der Überwachung hingegen festgestellt, dass sich die einer Krafteinwirkung in entgegengesetzten Richtungen ausgesetzten Artikel unterschiedlich verhalten, beispielsweise indem sich zumindest einer der Artikel in Richtung der auf ihn einwirkenden Kraft von einem oder mehreren anderen Artikeln beispielsweise über ein dem Verhältnis der Höhe der Krafteinwirkung und der Elastizität der Verklebung proportionales Maß hinaus entfernt, so wird insbesondere hieraus auf eine mangelhaft hergestellte Verklebung zwischen den betroffenen Artikeln rückgeschlossen.

Die Krafteinwirkung in entgegengesetzten Richtungen unter gleichzeitiger, bevorzugt sensorischer Überwachung zumindest der jeweils der Krafteinwirkung in entgegengesetzten Richtungen ausgesetzten Artikel, findet erfindungsgemäß während eines Transports eines zuvor durch Herstellung der Verklebungen zwischen seinen Artikeln ganz (im fertigen Zustand frei von einer Umfassung ausgeführte) oder teilweise (im fertigen Zustand mit einer Umfassung ausgeführte) fertiggestellten Gebindes zu einem weiteren Umgang mit dem Gebinde statt. Hierdurch findet eine Prüfung der Verklebungen der miteinander verbundenen Artikel ohne einen Zeitverlust bei dessen Transport zu einer sich im Anschluss an die Herstellung der Verklebungen zwischen den Artikeln des Gebindes anschließenden Behandlungsstation und insbesondere ohne zusätzlichen Aufstellungsplatzbedarf statt. Die anschließende Behandlungsstation kann beispielsweise vorgesehen sein, um eine Umfassung um die Gebindeanordnung herum anzuordnen, oder um die fertigen Gebinde beispielsweise zu Gebindelagen zu gruppieren, welche daraufhin als Stapellagen in einen an einem Stapelplatz zu errichtenden Stapel eingebracht werden können.

Eine vorteilhafte Ausgestaltung des Verfahrens sieht vor, dass die Krafteinwirkung in entgegengesetzten Richtungen erzeugt wird, indem:
a) das ganz (im fertigen Zustand frei von einer Umfassung ausgeführte) oder teilweise (im fertigen Zustand mit einer Umfassung ausgeführte) fertige Gebinde aufrecht stehend mit seiner durch die Unterseiten der Artikel des Gebindes gebildeten Aufstandsfläche über eine konvexe Welle oder Kante bewegt wird, welche zumindest zeitweilig zwischen zwei benachbarten Reihen oder Zeilen des Gebindes verläuft, wobei zwischen den Artikel der benachbarten Reihen oder Zeilen eine Krafteinwirkung in entgegengesetzten Richtungen erzeugt wird, welche mindestens eine von der Aufstandsfläche entfernt angeordnete Verklebung zwischen miteinander verbundenen Artikeln benachbarter Reihen oder Zeilen einer innerhalb der bei gewöhnlichem Umgang mit dem Gebinde auftretenden Belastungen liegenden Zugbelastung aussetzt, und/oder
b) das ganz (im fertigen Zustand frei von einer Umfassung ausgeführte) oder teilweise (im fertigen Zustand mit einer Umfassung ausgeführte) fertige Gebinde aufrecht stehend mit seiner durch die Unterseiten der Artikel des Gebindes gebildeten Aufstandsfläche über eine konkave Welle oder Kerbe bewegt wird, welche zumindest zeitweilig zwischen zwei benachbarten Reihen oder Zeilen des Gebindes verläuft, wobei zwischen den Artikel der benachbarten Reihen oder Zeilen eine Krafteinwirkung in entgegengesetzten Richtungen erzeugt wird, welche mindestens eine zu der Aufstandsfläche benachbarte oder mindestens eine zwischen der Aufstandsfläche und einer von der Aufstandsfläche entfernt angeordneten Verklebung vorgesehene Verklebung zwischen miteinander verbundenen Artikeln benachbarter Reihen oder Zeilen einer innerhalb der bei gewöhnlichem Umgang mit dem Gebinde auftretenden Belastungen liegenden Zugbelastung aussetzt, und/oder
c) mindestens zwei Artikel zweier unterschiedlicher Reihen oder Zeilen des ganz (im fertigen Zustand frei von einer Umfassung ausgeführte) oder teilweise (im fertigen Zustand mit einer Umfassung ausgeführte) fertigen Gebindes in einem Bereich nahe der durch die Unterseiten der Artikel des Gebindes gebildeten Aufstandsfläche oder in einem Bereich nahe der durch die Oberseiten der Artikel des Gebindes gebildeten Oberfläche des Gebindes, in welchem Bereich die Mantelflächen der miteinander durch Verklebungen verbundenen Artikel des Gebindes in der Gebindeanordnung nicht mehr zusammenstoßen, zumindest zeitweilig einer Klemmkraft ausgesetzt werden, wodurch mindestens eine von der Aufstandsfläche oder von der Oberfläche entfernt angeordnete Verklebung zwischen miteinander verbundenen Artikeln benachbarter Reihen oder Zeilen eine Zugbelastung erfährt, und/oder
d) das ganz (im fertigen Zustand frei von einer Umfassung ausgeführte) oder teilweise (im fertigen Zustand mit einer Umfassung ausgeführte) fertige Gebinde mit seinen Reihen oder Zeilen auf getrennten Fördermitteln aufstehend transportiert wird, wobei zumindest zwei Fördermittel zumindest abschnittsweise voneinander abweichende Bewegungsbahnen beschreiben oder zumindest abschnittsweise voneinander abweichende Bewegungsgeschwindigkeiten aufweisen, wodurch die Verklebungen zwischen den Artikeln der auf unterschiedlichen Fördermitteln aufstehenden Reihen oder Zeilen des Gebindes jeweils Zug- und/oder Scherbelastungen erfahren, wie sie beim Schieben oder Ziehen des Gebindes über eine Fläche mit einem den Förderflächen der Fördermittel entsprechenden Haftreibungskoeffizienten vorkommen, und/oder
e) das ganz (im fertigen Zustand frei von einer Umfassung ausgeführte) oder teilweise (im fertigen Zustand mit einer Umfassung ausgeführte) fertige Gebinde über eine Strecke transportiert wird, welche mindestens eine Lücke aufweist, deren Abmessungen zumindest der Erstreckung wenigstens eines Artikels des Gebindes längs und quer zur Transportrichtung entspricht, so dass wenn sich ein oder mehrere Artikel des Gebindes zumindest zeitweilig über der zumindest einen Lücke befinden, die Verklebungen dieser Artikel mit ihren benachbarten Artikeln Scherbelastungen erfahren, die einem manuellen Anheben des Gebindes beispielsweise an einem Tragegriff entsprechen, und/oder
f) zumindest zwei Artikel beispielsweise an der Peripherie der Gebindeanordnung des ganz (im fertigen Zustand frei von einer Umfassung ausgeführte) oder teilweise (im fertigen Zustand mit einer Umfassung ausgeführte) fertigen Gebindes, beispielsweise zwei benachbarte Artikel einer äußeren Reihe oder einer äußeren Zeile des Gebindes, oder jeweils einen Artikel zweier gegenüberliegender äußerer Reihen oder äußerer Zeilen des Gebindes zumindest zeitweilig mit jeweils einer vorgegebenen Kraft in entgegengesetzten Richtungen gedrückt oder gezogen werden, beispielsweise indem sie jeweils vermittels einer vorgegebenen Klemmkraft gegriffen und in entgegengesetzten Richtungen gedrückt und/oder gezogen werden, wodurch die Verklebungen zwischen den Artikeln, die in entgegengesetzten Richtungen gedrückt und/oder gezogen werden, jeweils Zug- und/oder Scherbelastungen erfahren, wie sie beim Quetschen, Schieben oder Ziehen des Gebindes mit der vorgegebenen Kraft, welche dem Produkt der vorgegebenen Klemmkraft mit dem Haftreibungskoeffizienten zwischen der Mantelfläche der Artikel und einer die Klemmkraft aufbringenden Einrichtung entspricht, auftreten.

Eine beispielsweise sensorische Überwachung der Reaktion der einer Krafteinwirkung in entgegengesetzter Richtung ausgesetzten Artikel kann berührungsfrei oder durch direkten Kontakt erfolgen. Eine berührungsfreie sensorische Überwachung kann beispielsweise durch einen oder mehrere Näherungsschalter verwirklicht werden, die ohne direkten Kontakt auf eine Annäherung und/oder auf eine Entfernung berührungsfrei reagieren, indem sie ein der Änderung der Nähe eines überwachten Objekts, hier eines Artikels, proportionales Ausgangssignal erzeugen.

Eine Überwachung der Position der Artikel ist darüber hinaus beispielsweise vermittels einer Echtzeit-Videoüberwachung unter Zuhilfenahme eines Bilderkennungsalgorithmus möglich, mit dem die einzelnen Artikel des Gebindes und dadurch deren Reaktionen auf die Krafteinwirkung im erfassten Videobild identifiziert werden können. Alternativ oder zusätzlich kann eine Überwachung der Reaktion der einer Krafteinwirkung in entgegengesetzter Richtung ausgesetzten Artikel auch vermittels Kontaktschaltern, beispielsweise vermittels unter einer Lücke angeordneter Druckschalter, erfolgen.

Weitere Eigenschaften des erfindungsgemäßen Verfahrens können der nachfolgend beschriebenen Vorrichtung entnommen werden, welche zur Durchführung des Verfahrens geeignet ist.

Ein zweiter Gegenstand der Erfindung betrifft eine Vorrichtung zur Prüfung der Verklebungen zwischen den Artikeln eines Gebindes aus unmittelbar miteinander durch Verklebungen verbundenen Artikeln. Die Artikel des Gebindes können:
- in einer Reihe geradlinig hintereinander angeordnet sein, oder
- in rechtwinklig zueinander verlaufenden Reihen und Zeilen regelmäßig angeordnet sein, oder
- in zwei oder mehr parallelen Reihen beispielsweise zu jeweils zwei oder mehr Artikeln mit schräg hierzu verlaufenden Zeilen beispielsweise zu jeweils einer der Anzahl der Reihen entsprechenden Zahl von Artikeln genestet versetzt zueinander angeordnet sein.

Das Gebinde ist bevorzugt frei von einer Umfassung ausgeführt.

Weitere Eigenschaften des Gebindes oder seiner Verklebungen können dem zuvor beschriebenen Verfahren entnommen werden, zu dessen Durchführung die Vorrichtung geeignet ist.

Die Vorrichtung umfasst Prüfmittel, welche nach der Herstellung der Verklebungen der Artikel des Gebindes untereinander miteinander durch mindestens eine Verklebung verbundene Artikel beispielsweise der selben Reihe oder der selben Zeile oder benachbarter Reihen und/oder Zeilen des Gebindes einzeln und/oder gruppenweise einer Krafteinwirkung in entgegengesetzten Richtungen aussetzen und die Reaktion der Artikel des Gebindes hierauf überwachen und insbesondere auch auswerten.

Die Prüfmittel umfassen Krafteinwirkungsmittel, welche mindestens ein in entgegengesetzten Richtungen auf zumindest zwei Artikel des Gebindes einwirkendes Kräftepaar erzeugen, von welchem Kräftepaar eine erste Kraft auf einen ersten Artikel miteinander durch eine Verklebung verbundener Artikel und ein zweite, der ersten Kraft entgegengerichtete Kraft auf einen zweiten Artikel miteinander durch eine Verklebung verbundener Artikel in derart entgegengesetzten Richtungen einwirkt, dass die Verklebung zwischen dem ersten und dem zweiten Artikel eine Zug- und/oder Scherbeanspruchung und/oder eine Momentenbeanspruchung erfährt. Die Kräfte, welche die Krafteinwirkungsmittel dabei erzeugen, liegen vorzugsweise innerhalb durch die Verklebungen bei gewöhnlichem Umgang mit dem Gebinde zu ertragenden Grenzen, wie sie beispielsweise beim Anheben und/oder Verschieben und/oder Absetzen des Gebindes auftreten.

Die Krafteinwirkungsmittel umfassen mindestens eine beispielsweise als Band- oder Rollenförderer ausgebildete Transporteinrichtung zum Transport mindestens eines zuvor ganz (im fertigen Zustand frei von einer Umfassung ausgeführte) oder teilweise (im fertigen Zustand mit einer Umfassung ausgeführte) fertiggestellten Gebindes beispielsweise zu einem weiteren Umgang mit dem oder den Gebinden. Dabei findet die Krafteinwirkung in entgegengesetzten Richtungen unter gleichzeitiger, bevorzugt sensorischer Überwachung zumindest der jeweils der Krafteinwirkung in entgegengesetzten Richtungen ausgesetzten Artikel, während eines Transports eines zuvor durch Herstellung der Verklebungen zwischen seinen Artikeln ganz (im fertigen Zustand frei von einer Umfassung ausgeführte) oder teilweise (im fertigen Zustand mit einer Umfassung ausgeführte) fertiggestellten Gebindes zu einem weiteren Umgang mit dem Gebinde statt. Hierdurch wird für eine Prüfung der Verklebungen der miteinander verbundenen Artikel eines Gebindes eine ohnehin zum Transport zum weiteren Umgang mit dem Gebinde benötigte Transporteinrichtung mitgenutzt, wodurch Zeitverluste aufgrund der Prüfung vermieden werden und außerdem der zusätzliche Aufstellungsplatzbedarf geringstmöglich ist.

Die Krafteinwirkungsmittel können eine konvexe Welle oder Kante in mindestens einer Transporteinrichtung umfassen, auf welcher Transporteinrichtung das ganz (im fertigen Zustand frei von einer Umfassung ausgeführte) oder teilweise (im fertigen Zustand mit einer Umfassung ausgeführte) fertige Gebinde aufrecht stehend mit seiner durch die Unterseiten der Artikel des Gebindes gebildeten Aufstandsfläche transportiert und in einer Transportrichtung fortbewegt wird. Die konvexe Welle oder Kante ist dabei derart in der Transporteinrichtung ausgebildet, dass das Gebinde die konvexe Welle oder Kante während seines Transports in Transportrichtung so passiert, dass die konvexe Welle oder Kante zwischen zwei benachbarten Reihen oder Zeilen des Gebindes verläuft. Hierdurch wird zwischen den Artikel der benachbarten Reihen oder Zeilen eine Krafteinwirkung in entgegengesetzten Richtungen erzeugt, welche mindestens eine von der Aufstandsfläche entfernt angeordnete Verklebung zwischen miteinander verbundenen Artikeln benachbarter Reihen oder Zeilen einer innerhalb der bei gewöhnlichem Umgang mit dem Gebinde auftretenden Belastungen liegenden Zugbelastung aussetzt.

Alternativ oder zusätzlich können die Krafteinwirkungsmittel eine konkave Welle oder Kerbe in mindestens einer Transporteinrichtung umfassen, auf welcher Transporteinrichtung das ganz (im fertigen Zustand frei von einer Umfassung ausgeführte) oder teilweise (im fertigen Zustand mit einer Umfassung ausgeführte) fertige Gebinde aufrecht stehend mit seiner durch die Unterseiten der Artikel des Gebindes gebildeten Aufstandsfläche transportiert und in einer Transportrichtung fortbewegt wird. Die konkave Welle oder Kerbe ist dabei derart in der Transporteinrichtung ausgebildet, dass das Gebinde die konkave Welle oder Kerbe während seines Transports in Transportrichtung so passiert, dass die konkave Welle oder Kerbe zwischen zwei benachbarten Reihen oder Zeilen des Gebindes verläuft. Hierdurch wird zwischen den Artikel der benachbarten Reihen oder Zeilen eine Krafteinwirkung in entgegengesetzten Richtungen erzeugt, welche mindestens eine zu der Aufstandsfläche benachbarte oder mindestens eine zwischen der Aufstandsfläche und einer von der Aufstandsfläche entfernt angeordneten Verklebung vorgesehene Verklebung zwischen miteinander verbundenen Artikeln benachbarter Reihen oder Zeilen einer innerhalb der bei gewöhnlichem Umgang mit dem Gebinde auftretenden Belastungen liegenden Zugbelastung aussetzt.

Alternativ oder zusätzlich können die Krafteinwirkungsmittel zwei oder mehr abschnittsweise parallel verlaufende Transporteinrichtungen umfassen, auf welchen Transporteinrichtungen das ganz (im fertigen Zustand frei von einer Umfassung ausgeführte) oder teilweise (im fertigen Zustand mit einer Umfassung ausgeführte) fertige Gebinde aufrecht stehend mit seiner durch die Unterseiten der Artikel des Gebindes gebildeten Aufstandsfläche transportiert und in einer Transportrichtung fortbewegt wird. Dabei werden je nachdem, ob die Reihen oder die Zeilen des Gebindes parallel zur Transportrichtung orientiert sind, bei parallel zur Transportrichtung orientierten Reihen des Gebindes, zumindest zwei Reihen, vorzugsweise jede Reihe des Gebindes und bei parallel zur Transportrichtung orientierten Zeilen des Gebindes, zumindest zwei Zeilen, vorzugsweise jede Zeile des Gebindes von einer eigenen Transporteinrichtung abgestützt. Entlang des Transportwegs sind Abschnitte vorgesehen, in denen der Abstand zwischen den einzelnen Transporteinrichtungen vergrößert ist, so dass die parallelen Transporteinrichtungen abschnittsweise unterschiedliche Bewegungsbahnen aufweisen. Bei einer Bewegung in Transportrichtung gesehen wird durch die Vergrößerung des Abstands zwischen den einzelnen Transporteinrichtungen auf die Verklebungen zwischen den Artikeln von auf unterschiedlichen Transporteinrichtungen abgestützten Reihen bzw. Zeilen des Gebindes eine Zugbelastung in Form einer Zugkraft aufgebracht, wie sie beim Ziehen des fertigen Gebindes über eine Fläche mit einem den Förderflächen der Fördermittel entsprechenden Haftreibungskoeffizienten vorkommt.

Alternativ oder zusätzlich können die Krafteinwirkungsmittel zwei oder mehr abschnittsweise parallel verlaufende Transporteinrichtungen umfassen, auf welchen Transporteinrichtungen das ganz (im fertigen Zustand frei von einer Umfassung ausgeführte) oder teilweise (im fertigen Zustand mit einer Umfassung ausgeführte) fertige Gebinde aufrecht stehend mit seiner durch die Unterseiten der Artikel des Gebindes gebildeten Aufstandsfläche transportiert und in einer Transportrichtung fortbewegt wird. Dabei werden je nachdem, ob die Reihen oder die Zeilen des Gebindes parallel zur Transportrichtung orientiert sind, bei parallel zur Transportrichtung orientierten Reihen des Gebindes, zumindest zwei Reihen, vorzugsweise jede Reihe des Gebindes und bei parallel zur Transportrichtung orientierten Zeilen des Gebindes, zumindest zwei Zeilen, vorzugsweise jede Zeile des Gebindes von einer eigenen Transporteinrichtung abgestützt. Die Transporteinrichtungen weisen zumindest zeitweilig unterschiedliche Transportgeschwindigkeiten auf. Durch unterschiedliche Bewegungs- bzw. Transportgeschwindigkeiten der einzelnen Transporteinrichtungen erfahren die Verklebungen zwischen den Artikeln von auf unterschiedlichen Transporteinrichtungen abgestützten Reihen bzw. Zeilen des Gebindes eine Scherbelastung in Form einer Scherkraft, wie sie beim Schieben des fertigen Gebindes über eine Fläche mit einem den Förderflächen der Transporteinrichtungen entsprechenden Haftreibungskoeffizienten vorkommt.

Alternativ oder zusätzlich können die Krafteinwirkungsmittel mindestens zwei in Transportrichtung hintereinander angeordnete Transporteinrichtungen umfassen, zwischen denen wenigstens eine Lücke ausgebildet ist. Eine solche Anordnung bildet ein Paar von in Transportrichtung durch die mindestens eine Lücke unterbrochen aneinander anschließenden Transporteinrichtungen. Die Abmessungen der Lücke entsprechen zumindest der Erstreckung wenigstens eines Artikels des Gebindes längs und quer zur Transportrichtung. Wenn sich ein oder mehrere Artikel des fertigen Gebindes über der zumindest einen Lücke befinden, erfahren die Verklebungen dieser Artikel mit ihren benachbarten Artikeln durch die Gewichtskraft des oder der sich momentan über der Lücke befindenden Artikel Scherbelastungen, die einem manuellen Anheben des Gebindes beispielsweise an einem Tragegriff entsprechen. Hierbei ist denkbar, dass mehrere parallel angeordnete Paare von in Transportrichtung durch die mindestens eine Lücke unterbrochen aneinander anschließenden Transporteinrichtungen vorgesehen sind, beispielsweise ein Paar je Reihe oder Zeile des Gebindes, abhängig von dessen Orientierung in Bezug auf die Transportrichtung.

In diesem Fall können auch Zugbelastungen auftreten, beispielsweise wenn der in Transportrichtung gesehen erste Artikel einer Reihe erstmal halb über der Lücke steht und droht, vom dem Gebinde wegzukippen.

Der Abstand, also die Lücke, zwischen den zwei hintereinander angeordneten Transporteinrichtungen ist insbesondere einstellbar, so dass auf Formatumstellungen der Vorrichtung, beispielsweise von 1,5-Liter-PET-Flaschen auf 0,33-Liter-Dosen, reagiert werden kann, insbesondere in der Weise, dass sich jeweils nur ein einziger Artikel zu einem Zeitpunkt vollständig über der Lücke befindet, um jede einzelne Klebeverbindung prüfen zu können.

Alternativ oder zusätzlich können die Krafteinwirkungsmittel mindestens zwei Aktoren umfassen, welche beispielsweise mit einem Gebinde in Transportrichtung einer Transporteinrichtung beweglich angeordnet sein können, und welche beispielsweise quer oder parallel zur Transportrichtung mindestens zwei Artikel zweier unterschiedlicher, bevorzugt äußerer Reihen oder Zeilen des Gebindes in einem Bereich nahe der durch die Unterseiten der Artikel des Gebindes gebildeten Aufstandsfläche oder in einem Bereich nahe der durch die Oberseiten der Artikel des Gebindes gebildeten Oberfläche des Gebindes, in welchem Bereich die Mantelflächen der miteinander durch Verklebungen verbundenen Artikel des Gebindes in der Gebindeanordnung nicht mehr zusammenstoßen, einer Klemmkraft aussetzen. Hierdurch erfährt mindestens eine von der Aufstandsfläche oder von der Oberfläche entfernt angeordnete Verklebung zwischen miteinander verbundenen Artikeln benachbarter Reihen oder Zeilen eine Zugbelastung.

Alternativ oder zusätzlich können die Krafteinwirkungsmittel mindestens zwei jeweils mit mindestens einem Artikel in Wechselwirkung bringbare Einwirkungselemente, beispielsweise in Form von beispielsweise ein oder mehrere Artikel beispielsweise umgreifender oder umklammernder Greifer oder zwischen zwei oder mehr Artikel beispielsweise eintauchender Stifte oder Stiftepaare umfassen, welche unabhängig voneinander mit einem Gebinde in Transportrichtung einer Transporteinrichtung beweglich angeordnet sind. Werden die mit unterschiedlichen Artikeln beispielsweise an der Peripherie der Gebindeanordnung des Gebindes beispielsweise durch Eingriff in Wechselwirkung stehenden Einwirkungselemente unterschiedlich beschleunigt, beispielsweise indem sie jeweils in entgegengesetzten Richtungen gedrückt und/oder gezogen werden, erfahren die Verklebungen zwischen den Artikeln, die in entgegengesetzten Richtungen gedrückt und/oder gezogen werden, jeweils Zug- und/oder Scherbelastungen, wie sie beim Quetschen, Schieben oder Ziehen des fertigen Gebindes mit der vorgegebenen Kraft entspricht. Sind die Einwirkungselemente beispielsweise als Greifer ausgebildet, die beispielsweise an entlang einer Bewegungsbahn unabhängig voneinander beweglichen Magnetshuttles angeordnet sind, entspricht die vorgegebene Kraft beispielsweise dem Produkt einer vorgegebenen Klemmkraft der Greifer mit dem Haftreibungskoeffizienten zwischen der Mantelfläche der Artikel und den Greifern. Ist ein Entweichen der Artikel aus dem Eingriff der Einwirkungselemente nicht möglich, beispielsweise weil die Greifer quer zur Transportrichtung des Gebindes zwischen die Artikel eingreifen und/oder weil die Bewegungsrichtung der Magnetshuttles quer zu derjenigen Richtung verläuft, in welcher ein Entweichen einzig möglich wäre, so entspricht die vorgegebene Kraft der von den Magnetshuttles aufbringbaren Vortriebskraft.

Die Prüfmittel umfassen darüber hinaus bevorzugt Überwachungsmittel, um die Reaktion zumindest derjenigen Artikel des Gebindes auf die Krafteinwirkung in entgegengesetzten Richtungen zu überwachen, welche jeweils momentan der Krafteinwirkung in entgegengesetzten Richtungen ausgesetzt sind. Die Überwachungsmittel erzeugen den durch Bewegungen gebildeten Reaktionen der überwachten Artikel proportionale Überwachungsmittelsignale.

Die Überwachungsmittel können beispielsweise Sensoren oder Einrichtungen umfassen, die durch Kontakt mit den überwachten Artikeln oder berührungsfrei, beispielsweise optisch, deren Reaktion auf die Krafteinwirkung erfassen.

Die Überwachungsmittel umfassen bevorzugt einen oder mehrere Kontaktschalter und/oder einen oder mehrere, auch als Näherungsschalter bezeichnete, berührungsfreie Sensoren und/oder mindestens eine Videokamera nebst mindestens einen Bilderkennungsalgorithmus ausführende Bilderfassungsmittel, beispielsweise in Form einer mit mindestens einer Videokamera verbundenen Datenverarbeitungseinrichtung und/oder eines mit mindestens einer Videokamera verbundenen Mikroprozessors, welche bzw. welcher den Bilderkennungsalgorithmus ausführt, mit welchem Bilderkennungsalgorithmus die einzelnen Artikel des Gebindes und dadurch deren Reaktionen auf die Krafteinwirkung in Echtzeit im erfassten Videobild identifiziert werden können.

Geeignete Arten von Näherungsschaltern sind beispielsweise:
- induktive Näherungsschalter, welche sowohl bei ferromagnetischen, als auch bei nichtmagnetischen aber metallischen Gegenständen auf das Auftreten eines Wirbelstroms reagieren,
- kapazitive Näherungsschalter, welche auch auf nicht leitende Werkstoffe reagieren,
- magnetische Näherungsschalter, wie beispielsweise Reedschalter oder Reedkontakte oder auch Hall-Sensoren, welche auf ein Magnetfeld und/oder dessen Änderung reagieren,
- optische Näherungsschalter, welche auf Lichtreflexion reagieren,
- Lichtschranken, welche auf eine Unterbrechung eines Lichtstrahls reagieren,
- Ultraschallsensoren, welche die Reflexion eines Ultraschallsignals an einem Hindernis auswerten,
- elektromagnetische Näherungsschalter, welche sowohl auf leitende als auch auf nicht leitende Werkstoffe reagieren und bei denen sich durch eine Annäherung die Schwingfrequenz eines Schwingkreisen ändert.

Eine Überwachung der Position der Artikel ist darüber hinaus beispielsweise vermittels einer bereits erwähnten Echtzeit-Videoüberwachung unter Zuhilfenahme eines Bilderkennungsalgorithmus möglich, mit dem die einzelnen Artikel des Gebindes und dadurch deren Reaktionen auf die Krafteinwirkung im erfassten Videobild identifiziert werden können. Alternativ oder zusätzlich kann eine Überwachung der Reaktion der einer Krafteinwirkung in entgegengesetzter Richtung ausgesetzten Artikel auch vermittels Kontaktschaltern, beispielsweise vermittels unter einer Lücke angeordneter Druckschalter, erfolgen.

Die Überwachungsmittel erzeugen bevorzugt ein oder mehrere Ausgangssignale, von denen jedes der Position eines überwachten Artikels relativ zum Gebinde proportional ist. Beispielsweise können die Ausgangssignale einer Annäherung oder einer Entfernung eines überwachten Artikels von einer beispielsweise vorgegebenen Sollposition des jeweiligen Artikels im Gebinde oder beispielsweise von einem Mittelwert der ebenfalls erfassten Positionen der verbleibenden oder aller Artikel des Gebindes proportional sein.

Die Überwachungsmittel sind bevorzugt in Abhängigkeit von der Ausführung der Krafteinwirkungsmittel angeordnet. Beispielsweise bei Krafteinwirkungsmitteln, die eine Lücke zwischen Transporteinrichtungen umfassen, über welche ein Gebinde transportiert wird, umfassen die Überwachungsmittel beispielsweise unterhalb und/oder seitlich der Lücke angeordnete Näherungs- und/oder Kontaktschalter und/oder einen oder mehrere beispielsweise an einer Schütte unterhalb der Lücke angeordnete Gewichtssensoren.

Bevorzugt umfassen die Prüfmittel ferner vorzugsweise mit den Überwachungsmitteln derart verbundene Auswertungsmittel, dass die Auswertungsmittel die Ausgangssignale der Überwachungsmittel empfangen können. Die Auswertungsmittel dienen dazu, anhand der Ausgangssignale der Überwachungsmittel festzustellen, ob sich die vermittels der Überwachungsmittel überwachten Artikel, welche einer Krafteinwirkung in entgegengesetzten Richtungen ausgesetzt sind, gleich oder unterschiedlich verhalten. Die Auswertungsmittel erzeugen zumindest ein erstes Prüfsignal, welches ordnungsgemäß hergestellte Verklebungen zwischen den überwachten Artikeln anzeigt, wenn sich die überwachten Artikel gleich verhalten, entsprechend einer Gleichartigkeit der Ausgangssignale der Überwachungsmittel oder einer Gleichartigkeit der Änderungen der Ausgangssignale der Überwachungsmittel für verschiedene, überwachte Artikel des Gebindes, zumindest innerhalb vorgegebener Grenzen. Die Auswertungsmittel erzeugen zumindest ein zweites Prüfsignal, welches mangelhaft hergestellte Verklebungen zwischen den überwachten Artikeln anzeigt, wenn sich die überwachten Artikel unterschiedlich verhalten, beispielsweise indem sich zumindest einer der Artikel in Richtung der auf ihn einwirkenden Kraft von einem oder mehreren anderen Artikeln beispielsweise über ein dem Verhältnis der Höhe der Krafteinwirkung und der Elastizität der Verklebung proportionales Maß hinaus entfernt. Das zweite Prüfsignal kann dementsprechend erzeugt und beispielsweise ausgegeben werden, wenn eine Gleichartigkeit der Ausgangssignale der Überwachungsmittel oder einer Gleichartigkeit der Änderungen der Ausgangssignale der Überwachungsmittel für verschiedene, überwachte Artikel des Gebindes, zumindest innerhalb vorgegebener Grenzen, nicht vorliegt.

Die Auswertungsmittel können beispielsweise durch eine Datenverarbeitungseinrichtung und/oder einen Mikroprozessor gebildet sein oder eine bzw. einen solchen umfassen.

Es ist ersichtlich, dass die Erfindung durch ein Verfahren bzw. eine Vorrichtung verwirklicht ist. Das Verfahren oder die Vorrichtung kann zunächst den Transport von Artikeln unter vorzugsweise berührungslosem Aufbringen jeweils eines, zweier oder mehrerer Klebepunkte eines Klebstoffs auf wenigstens eine in der Gebindeanordnung mit einer Mantelfläche eines weiteren Artikels zusammenstoßende Mantelfläche bzw. Partien von in der Gebindeanordnung zusammenstoßenden Mantelflächen zumindest eines Artikels vorsehen. Das Verfahren oder die Vorrichtung kann im Anschluss hieran vorsehen, dass anschließend mindestens zwei Artikel zusammengeführt und dabei einander derart angenähert werden, dass der mindestens eine zumindest auf der Mantelfläche eines Artikels aufgebrachte Klebepunkt einen anderen Artikel wenigstens berührt. Das Verfahren oder die Vorrichtung kann daraufhin vorsehen, dass die Artikel für eine gewisse Zeit aneinander gepresst oder aneinander gehalten werden, bis der Klebstoff an der so hergestellten Verklebung zwischen den Artikeln zumindest entsprechend der einleitenden Definition ausgehärtet ist. Das Verfahren bzw. die Vorrichtung sehen in jedem Fall vor, dass nach der Herstellung eines Gebindes aus mindestens zwei miteinander durch eine Verklebung unmittelbar miteinander verbundenen Artikeln eine Prüfkraft aufgebracht wird, welche die Artikel wieder auseinander zieht oder aneinander abzugleiten versucht. Diese Prüfkraft wird gemäß dem Verfahren bzw. der Vorrichtung durch eine Krafteinwirkung in entgegengesetzten Richtungen erzeugt, welche durch mindestens ein Kräftepaar erfolgt, von welchem eine erste Kraft auf einen ersten Artikel der miteinander durch eine Verklebung verbundenen Artikel und ein zweite, der ersten Kraft entgegengerichtete Kraft auf einen zweiten Artikel der miteinander durch eine Verklebung verbundenen Artikel in derart entgegengesetzten Richtungen einwirkt, dass wenigstens eine zwischen dem ersten und dem zweiten Artikel befindliche Verklebung eine Zug- und/oder Scherbeanspruchung und/oder eine Momentenbeanspruchung erfährt.

Das Verfahren und die Vorrichtung sehen außerdem vor, dass während des Aufbringens der Prüfkraft eine Überwachung der Reaktion zumindest der beteiligten Artikel erfolgt. Bei den beteiligten Artikeln handelt es sich zumindest um wenigstens einen ersten Artikel, auf den die erste Kraft einwirkt, und um mindestens einen zweiten Artikel, auf den die zweite Kraft einwirkt, sowie wahlweise um gegebenenfalls einen oder mehrere dazwischen angeordnete Artikel.

Bevorzugt umfasst die Überwachung ein Messen, ob die zwei Artikel voneinander entfernt wurden, und/oder ein Messen des Kraftverlaufs und/oder ein Messen des Wegverlaufs und/oder ein Messen des Winkelverlaufs bei einer Drehbewegung.

Das durch Aufbringen der Prüfkraft und Überwachen beispielsweise durch Messen erfolgende Prüfen oder Testen der Verklebungen kann in zwei Achsen, beispielsweise längs und quer zur Transportrichtung, in drei Achsen beispielsweise unter zusätzlicher Drehung entweder um eine Kipp- oder um eine Artikelachse, beispielsweise eine normal zu einer auf einer die durch die Unterseiten der Artikel gebildeten Boden- oder Aufstellflächen der Artikel eines Gebindes einschließenden Ebene aufstehende Hochachse, oder in vier Achsen erfolgen. Das Prüfen oder Testen der Verklebungen kann in mehreren oder in allen Achsen gleichzeitig erfolgen. Alternativ oder zusätzlich kann es für verschiedene Achsen nacheinander erfolgen.

Als Reaktion auf eine fehlerhafte Verklebung zweier oder mehrerer Artikel kann eine oder können mehrere der nachfolgend angeführten Maßnahmen automatisch eingeleitet werden:
- Ausgeben einer Fehlermeldung an einen Bediener, beispielsweise in Form eines akustischen Signals oder in einem Pop-up-Fenster in einem Display eines Bedienpanels einer das Verfahren ausführenden Vorrichtung und/oder
- Ausschleusen des Artikels und/oder des Gebindes, an welchem der Fehler aufgetreten ist und/oder
- Stoppen der Vorrichtung sowie gegebenenfalls einer die Vorrichtung umfassenden oder von der Vorrichtung umfassten Anlage zur Herstellung von Gebinden aus in mindestens einer Reihe und/oder mindestens einer Zeile zu mindestens zwei Artikeln unmittelbar miteinander durch Verklebungen verbundenen Artikeln, um dem Bediener beispielsweise Zeit zu geben, den Fehler zu beheben und/oder
- Steuern weiterer Komponenten der Anlage derart, dass der Fehler berücksichtigt wird, wie etwa wenn ein Gebinde ausgeworfen wurde, Auffüllen der entstandenen Lücke im Gebindestrom durch ein weiteres nachzuförderndes Gebinde und/oder
- Regeln bestimmter Komponenten der Vorrichtung und/oder der Anlage.

Die Regelung kann auch bei Gut-Messungen vorgenommen werden.

Die Regelung kann beispielsweise umfassen, dass:
- die Menge an Klebstoff einzelner Klebstoffapplikatoren auf Basis des Messergebnisses für die darauffolgenden Artikel beispielsweise durch Ventilschaltzeitänderungen bei einer Klebepistole verändert wird, beispielsweise wenn es häufiger die gleiche Klebeverbindung innerhalb eines Gebindes ist, welche bei der Prüfung reißt und zurückverfolgt wird, dass in diesen Fällen immer derselbe Klebstoffapplikator verantwortlich war. Insbesondere wird die Menge an Klebstoff an der bestimmten Klebepistole oder an allen Klebstoffapplikatoren erhöht, wenn eine oder mehrere fehlerhafte Verklebungen festgestellt werden;
- die Menge an Klebstoff aller Klebstoffapplikatoren auf Basis des Messergebnisses für die darauffolgenden Artikel verändert wird, insbesondere hinsichtlich der minimal aufzubringenden Menge an Klebstoff. Hierfür können auch in bestimmten Abständen Testläufe gefahren werden, in denen auch Kräfte eingesetzt werden, welche die Gebinde auf jeden Fall zerstören, um festzustellen, wieviel weniger Klebstoff eingesetzt werden kann, bis eine Zerstörungskraft, bei der eine Verbindung reißt, einen Sollwert gerade noch erreicht. Es ist auch hier möglich, einzelne Klebstoffapplikatoren unterschiedlich zu regeln. Auf diese Weise ist es möglich, den Klebstoffverbrauch zu reduzieren.
- die Behälter vor dem Aufbringen des Klebstoffs anders zu den Klebstoffapplikatoren orientiert werden, so dass der Klebstoff auf andere Bereiche des Artikels aufgetragen wird, welche bevorzugt weiter entfernt von der Mittelachse des Artikels liegen, so dass der Kleber beim Zusammenführen der Artikel näher zum benachbarten Artikel liegt. Dies ist insbesondere bei Artikeln relevant, deren äußere Fläche von einem Zylinder abweicht, beispielsweise wenn der Artikel Konturen, wie etwa Panels, Griffmulden, dreidimensionale Verzierungen oder dergleichen aufweist, um nur einige der denkbaren Ausgestaltungen zu erwähnen. Der Klebstoff wird dann bevorzugt an den erhabenen Stellen angebracht, an denen der Artikel eine im fertigen Gebinde benachbarten Artikel auch berühren kann.
- In Anlehnung an die zuvor beschriebene Orientierung der Artikel die Klebstoffapplikatoren orientiert werden, wenn sie mit Antrieben versehen sind.

Bei der Regelung und deren Varianten kann es sich auch um eine unabhängige Erfindung handeln, wenn beispielsweise eine Prüfung durchgeführt wird, bei welcher keine Kräfte auf die Artikel aufgebracht werden.

Insbesondere werden die einzelnen Behälter eines Gebindes während des gesamten Verfahrens kontinuierlich transportiert.

In bestimmten Fällen kann es aber auch vorkommen, dass die Behälter für die Überprüfung kurz stoppen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar. Es zeigen in schematischer Darstellung:

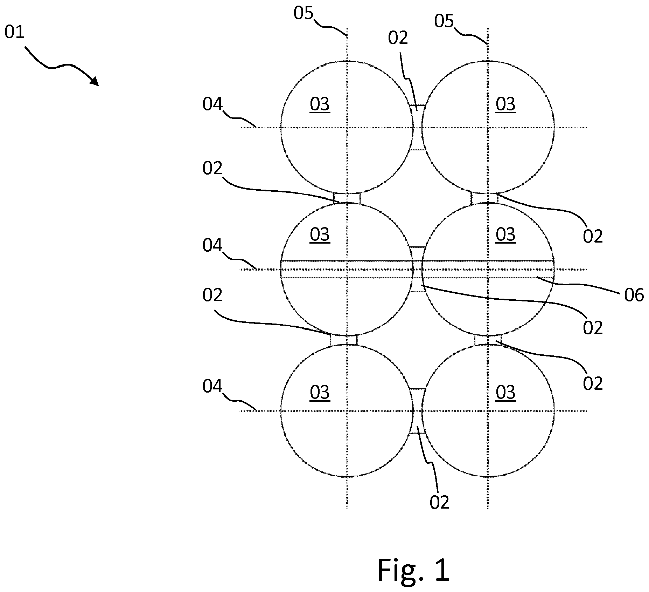

- Fig. 1: ein 3x2 Gebinde aus vermittels Verklebungen unmittelbar miteinander verbundenen Artikeln mit drei Reihen und zwei rechtwinklig zu diesen angeordneten Zeilen in einer Draufsicht.

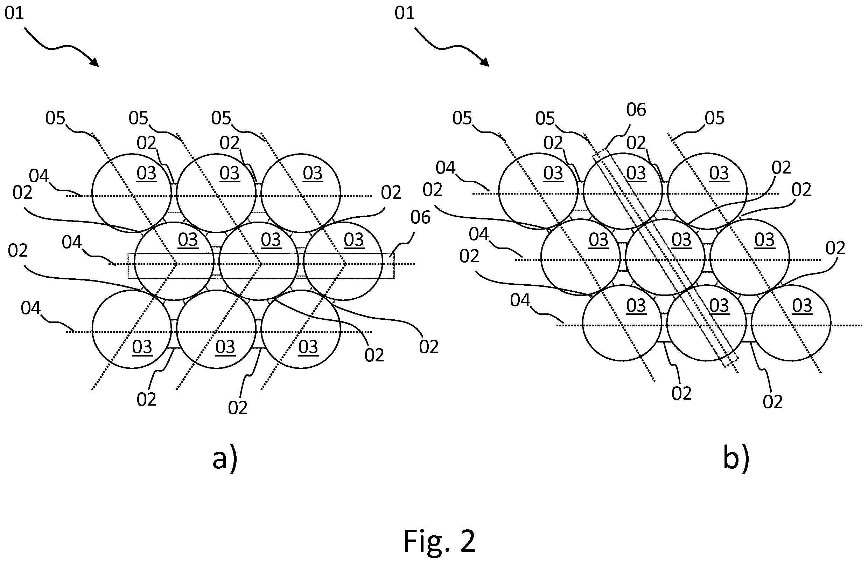

- Fig. 2: ein 3x3 Gebinde aus vermittels Verklebungen unmittelbar miteinander verbundenen Artikeln in genesteter Anordnung mit drei Reihen und drei schräg zu diesen verlaufenden Zeilen in einer Draufsicht, wobei n Fig. 2 a) dessen schräg zu den Reihen angeordnete Zeilen V-förmig abgewinkelt sind und in Fig. 2 b) dessen schräg zu den Reihen angeordnete Zeilen gerade verlaufen.

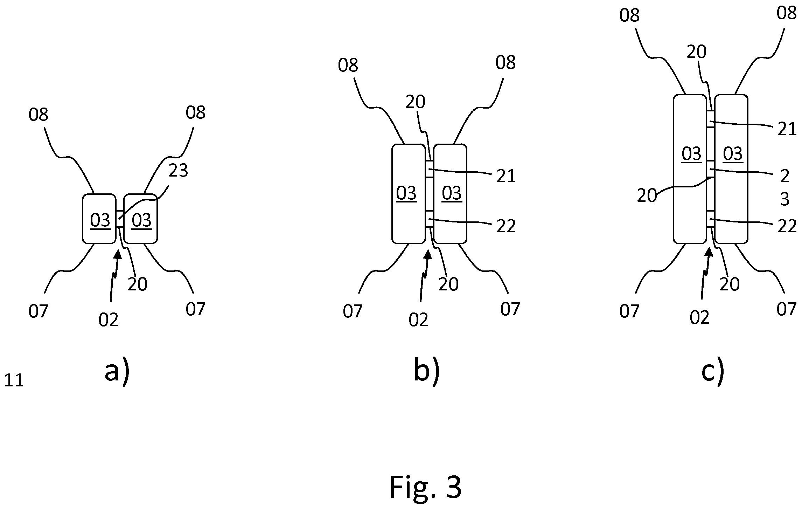

- Fig. 3: eine Verklebung zwischen zwei innerhalb eines Gebindes unmittelbar miteinander verbunden Artikeln mit nur einem Klebepunkt in Fig. 3 a), mit zwei über die Höhe der Artikel verteilt angeordneten Klebepunkten in Fig. 3 b) und mit drei über die Höhe der Artikel verteilt angeordneten Klebepunkten in Fig. 3 c), jeweils in einer Seitenansicht.

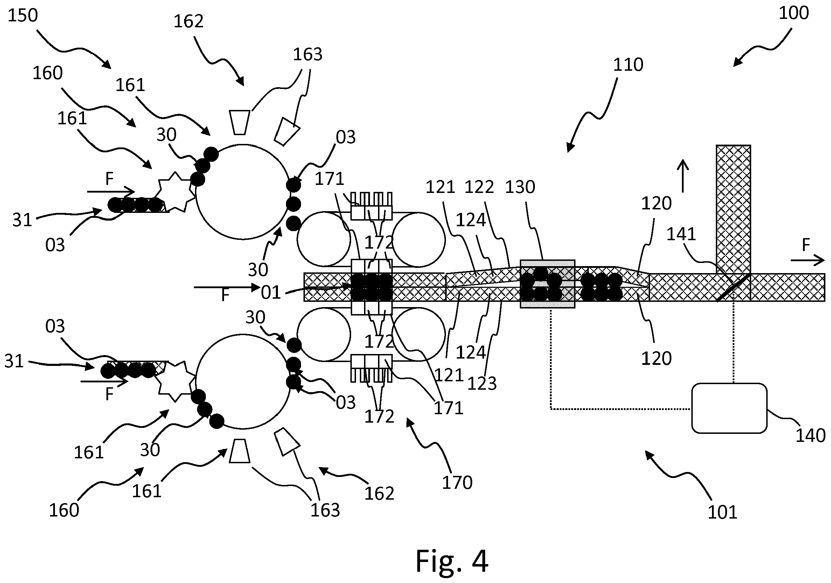

- Fig. 4: ein erstes Ausführungsbeispiel einer Herstellungsmittel zur Herstellung von 2x3 Gebinden mit rechtwinklig zueinander angeordneten Reihen und Zeilen umfassenden und/oder einer im Anschluss an Herstellungsmittel zur Herstellung von 2x3 Gebinden mit rechtwinklig zueinander angeordneten Reihen und Zeilen angeordneten Vorrichtung zur Prüfung der Verklebungen zwischen den Artikeln eines Gebindes aus in mindestens einer Reihe und/oder mindestens einer Zeile zu mindestens zwei Artikeln unmittelbar miteinander durch Verklebungen verbundenen Artikeln in einer Draufsicht.

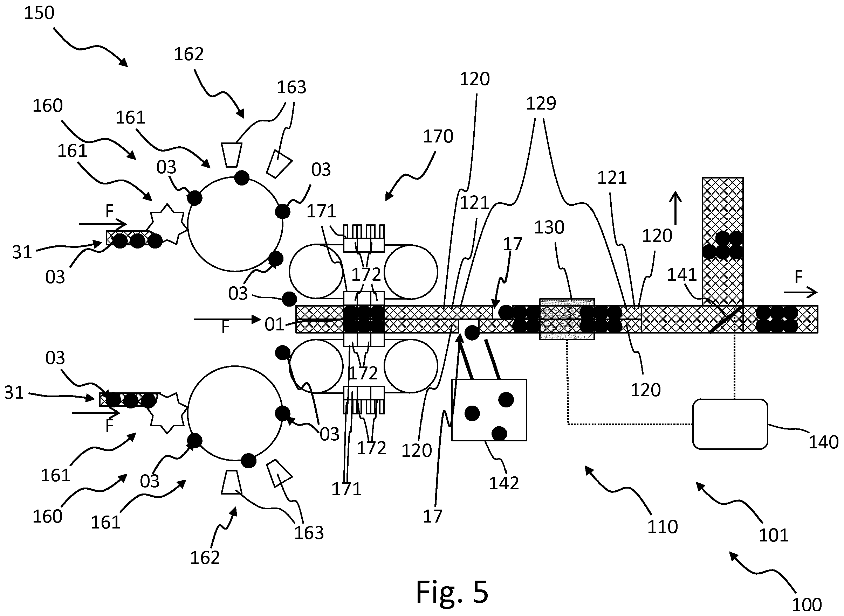

- Fig. 5: ein zweites Ausführungsbeispiel einer Herstellungsmittel zur Herstellung von 2x3 Gebinden mit rechtwinklig zueinander angeordneten Reihen und Zeilen umfassenden und/oder einer im Anschluss an Herstellungsmittel zur Herstellung von 2x3 Gebinden mit rechtwinklig zueinander angeordneten Reihen und Zeilen angeordneten Vorrichtung zur Prüfung der Verklebungen zwischen den Artikeln eines Gebindes aus in mindestens einer Reihe und/oder mindestens einer Zeile zu mindestens zwei Artikeln unmittelbar miteinander durch Verklebungen verbundenen Artikeln in einer Draufsicht.

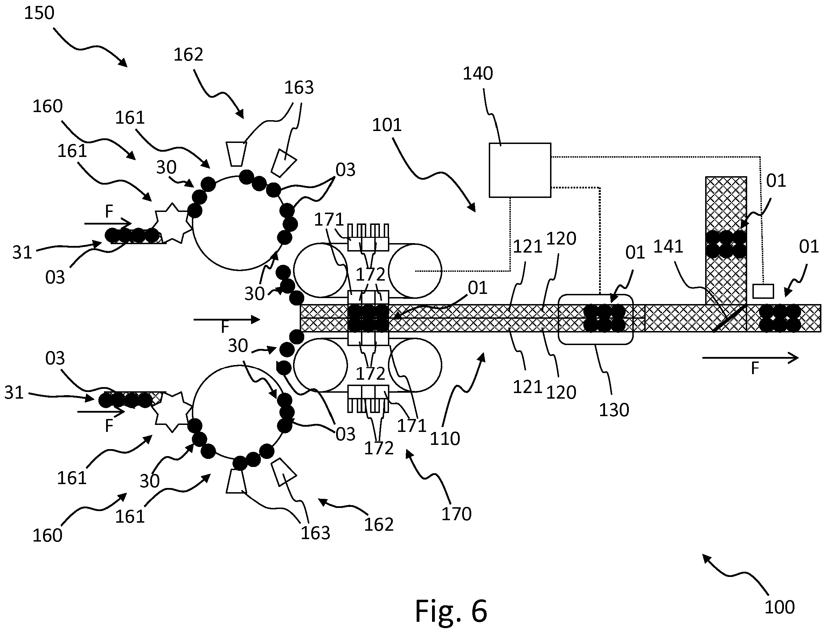

- Fig. 6: ein drittes Ausführungsbeispiel einer Herstellungsmittel zur Herstellung von 2x3 Gebinden mit rechtwinklig zueinander angeordneten Reihen und Zeilen umfassenden und/oder einer im Anschluss an Herstellungsmittel zur Herstellung von 2x3 Gebinden mit rechtwinklig zueinander angeordneten Reihen und Zeilen angeordneten Vorrichtung zur Prüfung der Verklebungen zwischen den Artikeln eines Gebindes aus in mindestens einer Reihe und/oder mindestens einer Zeile zu mindestens zwei Artikeln unmittelbar miteinander durch Verklebungen verbundenen Artikeln in einer Draufsicht.

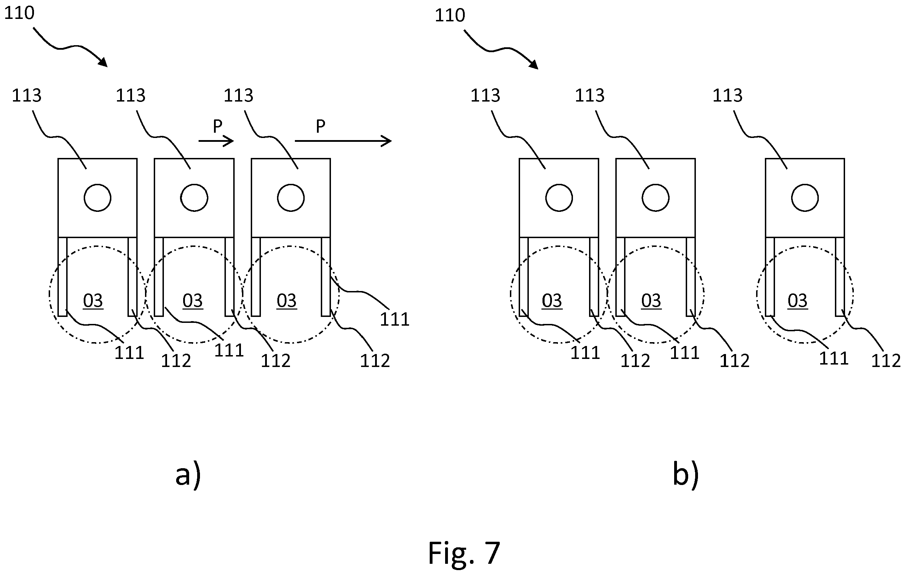

- Fig. 7: eine Darstellung einer ersten Variante einer Prüfung der Verklebungen vermittels einer Vorrichtung aus Fig. 6 in einer Draufsicht, wobei Fig. 7 a) einen Zustand zu Beginn der Prüfung und bei ordnungsgemäß ausgeführten Verklebungen zeigt und Fig. 7 b) einen Zustand bei einer mangelhaft ausgeführten Verklebung zeigt.

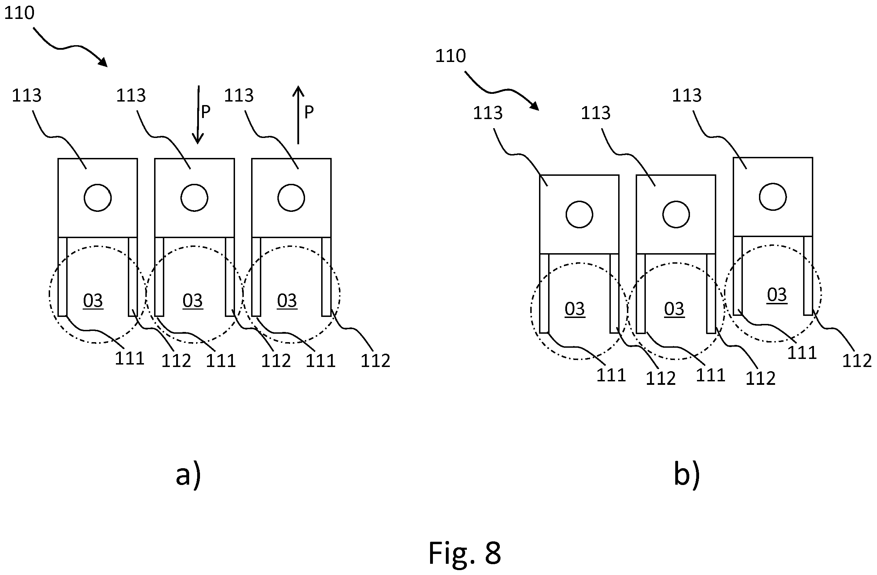

- Fig. 8: eine Darstellung einer alternativen oder zusätzlichen zweiten Variante einer Prüfung der Verklebungen vermittels einer Vorrichtung aus Fig. 6 in einer Draufsicht, wobei Fig. 8 a) einen Zustand zu Beginn der Prüfung und bei ordnungsgemäß ausgeführten Verklebungen zeigt und Fig. 8 b) einen Zustand bei einer mangelhaft ausgeführten Verklebung zeigt.

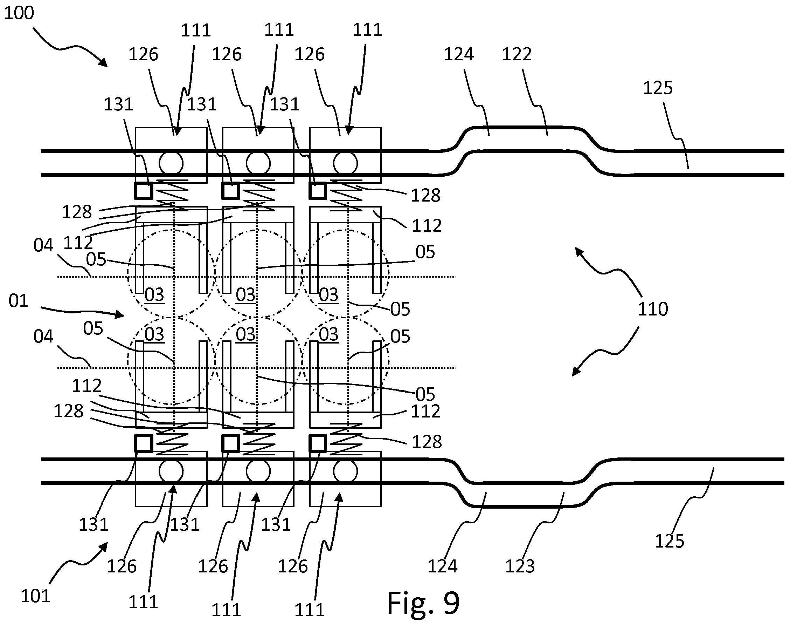

- Fig. 9: eine Darstellung einer Variante einer Sensoranordnung zur Prüfung der Verklebungen vermittels einer Vorrichtung aus Fig. 4 in einer Draufsicht.

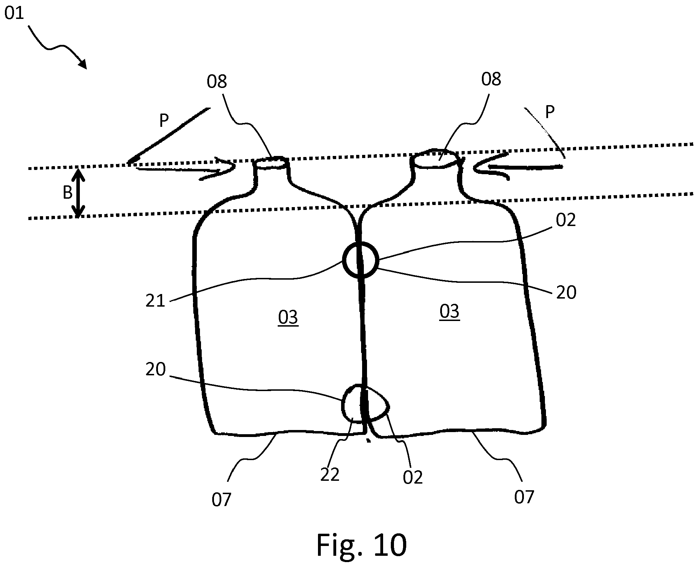

- Fig. 10: eine alternative oder zusätzliche dritte Variante einer Prüfung der Verklebungen zwischen den Artikeln eines Gebindes aus in mindestens einer Reihe und/oder mindestens einer Zeile zu mindestens zwei Artikeln unmittelbar miteinander durch Verklebungen verbundenen Artikeln in einer Seiten- oder Vorderansicht.

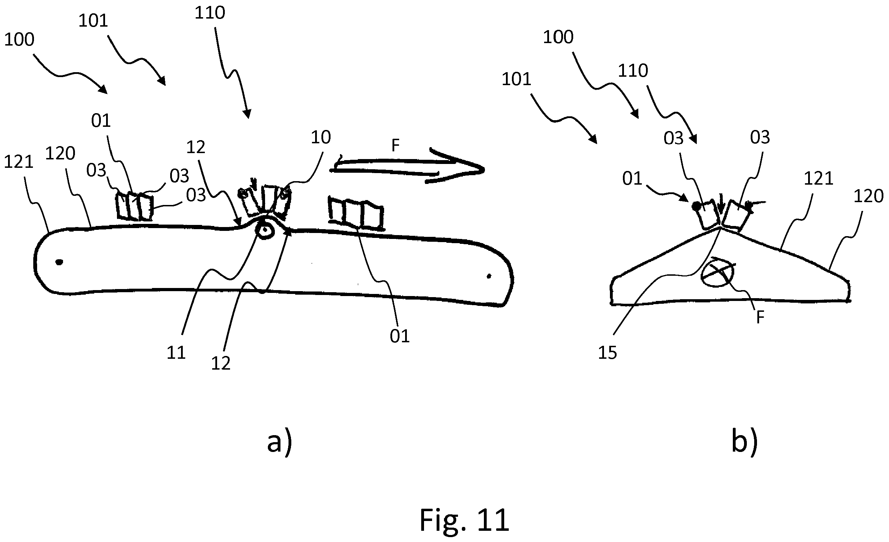

- Fig. 11: eine alternative oder zusätzliche vierte Variante einer Prüfung der Verklebungen zwischen den Artikeln eines Gebindes aus in mindestens einer Reihe und/oder mindestens einer Zeile zu mindestens zwei Artikeln unmittelbar miteinander durch Verklebungen verbundenen Artikeln in Fig. 11 a) in einer Seitenansicht und in Fig. 11 b) in einer Vorderansicht.

Ein in Fig. 1, Fig. 2, Fig. 3 ganz oder in Teilen dargestelltes Gebinde 01 besteht aus einer Anzahl A von unmittelbar miteinander durch Verklebungen 02 verbundenen Artikeln 03. Die Artikel 03 des Gebindes 01 sind in einer Reihe 04 oder in einer Zeile 05 angeordnet, oder sie sind in zwei oder mehr parallelen Reihen 04 und/oder in zwei oder mehr parallelen Zeilen 05 zu jeweils zwei oder mehr Artikeln 03 regelmäßig in rechtem Winkel oder genestet versetzt zueinander angeordnet. Die Artikel 03 des Gebindes 01 sind demnach in R Reihen 04 und Z Zeilen 05 angeordnet, wobei die Anzahl der Artikel 03 je Reihe 04 beispielsweise der Anzahl Z der Zeilen 05 im Gebinde 01 entspricht. Es können jedoch grundsätzlich auch Reihen mit unterschiedlicher Anzahl von Artikeln 03 zu einem Gebinde 01 zusammengefügt sein.

Ein Gebinde 01 umfasst demnach beispielsweise A=RxZ Artikel 03 in R Reihen 04 und Z Zeilen 05 mit R≥2 und Z≥1 oder mit R≥1 und Z≥2.

Ein Gebinde 01 mit rechtwinklig zueinander verlaufenden Reihen 04 und Zeilen 05 ist in Fig. 1 dargestellt. Ein Gebinde 01 mit genestet angeordneten Artikeln 03 ist in Fig. 2 dargestellt. Im Fall eines Gebindes 01 mit genestet angeordneten Artikeln 03 verlaufen die Reihen 04 und Zeilen 05 schräg bzw. diagonal zueinander, wobei die schräg zu den Reihen 04 verlaufenden Zeilen in einer Draufsicht wie in Fig. 2 a) dargestellt V-förmig abgewinkelt verlaufen können, oder wie in Fig. 2 b) dargestellt gerade verlaufen können.

Insbesondere bilden drei der Verbindungen der Mittelpunkte dreier Artikel 03 innerhalb einer rechtwinkligen Anordnung ein gleichschenkliges und rechtwinkliges Dreieck, insbesondere wenn die Artikel 03 im Wesentlichen zylindrisch sind.

Insbesondere bilden drei der Verbindungen der Mittelpunkte dreier Artikel 03 innerhalb einer genesteten Anordnung ein gleichseitiges Dreieck, insbesondere wenn die Artikel 03 im Wesentlichen zylindrisch sind.

Die Verklebungen 02 sind durch jeweils einen, zwei oder mehrere auf den in der Gebindeanordnung zusammenstoßenden Mantelflächen der Artikel 03 angebrachte Klebepunkte 20 eines Klebstoffs gebildet. Eine Verklebung 02 zwischen zwei Artikeln 03 kann demnach wie in Fig. 3 a) dargestellt einen, oder wie in Fig. 3 b) dargestellt zwei oder wie in Fig. 3 c) dargestellt drei oder mehrere Klebepunkte 20 umfassen.

Grundsätzlich müssen nicht alle Artikel 03 innerhalb des Gebindes 01 mit allen ihren benachbarten Artikeln 03 unmittelbar miteinander verbunden sein. Beispielsweise kann ein Artikel 03 im Inneren des Gebindes 01 nur mit einem, zwei oder drei Artikeln 03 aller seiner benachbarten Artikel 03 unmittelbar verbunden sein.

Das fertige Gebinde 01 kann mit einem Tragegriff 06 versehen sein.

Um sicherzugehen, dass die Verklebungen 02 zwischen den Artikeln 03 zumindest Belastungen ertragen, wie sie beim normalen Umgang mit dem Gebinde 01 auftreten, und es bei diesen Belastungen zu keiner Zerstörung der Verklebungen oder der Mantelflächen, auf welchen die Verklebungen aufgebracht sind, kommt, und/oder ob die Verklebungen belastbare Verbindungen mit den Mantelflächen eingegangen sind, auf welche sie aufgebracht wurden, oder es zu einer Ablösung der Verklebungen von den entsprechenden Mantelflächen bei auftretenden Belastungen innerhalb der beim normalen Umgang mit dem Gebinde 01 liegenden Grenzen kommt, sieht die Erfindung eine Prüfung der Verklebungen 02 am zumindest teilweise fertig gestellten Gebinde 01 vor. Dabei handelt es sich nach der Herstellung der Verklebungen der Artikel des Gebindes untereinander um ein fertig gestelltes Gebinde 01, wenn dieses frei von einer Umfassung ausgeführt ist. Wird das Gebinde aus in mindestens einer Reihe 04 und/oder mindestens einer Zeile 05 zu mindestens zwei Artikeln 03 unmittelbar miteinander durch Verklebungen 02 verbundenen Artikeln 01 zusätzlich mit einer Umfassung versehen, so findet die Prüfung der Verklebungen 02 statt, bevor die Gebindeanordnung aus den miteinander verklebten Artikeln 03 mit der Umfassung versehen wird. In diesem Fall findet die Prüfung demnach am durch Herstellung der Verklebungen 02 teilweise fertig gestellten Gebinde 01 statt.

Wenn im Nachfolgenden von einer Prüfung einer oder mehrerer Verklebung 02 im Kontext mit mehreren, beispielsweise über die Höhe der Artikel verteilt angeordneten Verklebungen 02 die Rede ist, so kann dies auch die gezielte Prüfung eines oder mehrerer, eine Verklebung 02 zwischen zwei Artikeln 03 des Gebindes 01 bildenden Klebepunkten 20 umfassen. Beispielsweise kann ein nahe den Unterseiten 07 zweier vermittels einer Verklebung 02 miteinander verbundener Artikel 03 angeordneter, unterer Klebepunkt 20 (entsprechend einer unteren Verklebung 22 in Fig. 3) der Verklebung 02, die aus mehreren entlang der sich normal zu einer parallel zu den Reihen 04 und Zeilen 05 im fertigen Gebinde 01 verlaufenden Ebene erstreckenden Hochachsen zweier miteinander verbundener Artikel 03 verteilt angeordneten Klebepunkten 20 besteht - kurz als über die Höhe verteilt angeordnete Klebepunkte 20 bezeichnet -, geprüft werden, indem die beiden Artikel 03 an deren Unterseiten 07 auseinandergezogen werden, beispielsweise indem die beiden Artikel 03 über eine konkave Welle 10 bzw. eine konkave Partie 12 einer Welle 10 oder über eine U- oder V-förmige Kerbe bewegt werden, oder indem die beiden Artikel 03 in einem Bereich B nahe deren Oberseiten 08, in welchem Bereich B die beiden Artikel 03 oberhalb eines am nächsten zu den Oberseiten 08 der beiden Artikel 03 angeordneten, oberen Klebepunkts 20 (entsprechend einer oberen Verklebung 21 in Fig. 3) an ihren Mantelflächen nicht mehr zusammenstoßen, zusammengedrückt werden. Umgekehrt kann eine Prüfung eines oberen Klebepunkts 20 bzw. einer oberen Verklebung 21 erfolgen, indem die Artikel 03 oben auseinander gezogen werden, beispielsweise indem die beiden Artikel 03 über eine konvexe Welle 10 bzw. eine konvexe Partie 11 einer Welle 10 oder über eine Kante bewegt werden, oder indem die beiden Artikel 03 in einem Bereich B nahe deren Unterseiten 07, in welchem Bereich B die beiden Artikel 03 unterhalb eines am nächsten zu den Unterseiten 07 der beiden Artikel 03 angeordneten, unteren Klebepunkts 20 (entsprechend einer unteren Verklebung 22 in Fig. 3) an ihren Mantelflächen nicht mehr zusammenstoßen, zusammengedrückt werden (Fig. 10). Eine beispielsweise dazwischen liegende oder einzige, mittlere Verklebung 23, entsprechend einem mittleren oder einzigen Klebepunkt 20 einer Verklebung 02, kann dabei ebenfalls der Prüfung ausgesetzt werden, oder sich neutral verhalten (Fig. 3 a), Fig. 3 c)).

Dies vorausgeschickt sieht ein erfindungsgemäßes Verfahren zur Prüfung der Verklebungen 02 zwischen den Artikeln 03 eines Gebindes 03 aus in mindestens einer Reihe 04 und/oder mindestens einer Zeile 05 zu mindestens zwei Artikeln 03 unmittelbar miteinander durch Verklebungen 02 verbundenen Artikeln 01 vor, dass durch mindestens eine Verklebung 02 unmittelbar miteinander oder mittelbar über einen oder mehrere dazwischen angeordnete Artikel 03 miteinander verbundene Artikel 03 beispielsweise der selben Reihe 04 oder der selben Zeile 05 oder benachbarter Reihen 04 und/oder Zeilen 05 des Gebindes 01 einzeln und/oder gruppenweise einer Krafteinwirkung in entgegengesetzten Richtungen ausgesetzt werden. Die Krafteinwirkung in entgegengesetzten Richtungen erfolgt durch mindestens ein Kräftepaar , von welchem eine erste Kraft auf einen ersten Artikel 03 miteinander durch mindestens eine Verklebung 02 unmittelbar miteinander oder mittelbar über einen oder mehrere dazwischen angeordnete Artikel 03 miteinander verbundener Artikel 03 und ein zweite, der ersten Kraft entgegengerichtete Kraft auf einen zweiten Artikel 03 miteinander durch eine Verklebung 02 unmittelbar oder mittelbar über einen oder mehrere dazwischen angeordnete Artikel 03 verbundener Artikel 03 in derart entgegengesetzten Richtungen einwirkt, dass wenigstens eine Verklebung 02 zwischen dem ersten und dem zweiten Artikel 03 eine Zug- und/oder Scherbeanspruchung und/oder eine Momentenbeanspruchung erfährt.

Bei den Kräften handelt es sich dabei um resultierende Kräfte, wie sie beispielsweise auch erzeugt werden können, indem von beispielsweise drei oder mehr in einer Reihe 04 oder Zeile 05 benachbarte Artikel 03 zwei Artikel 03 zwei äußeren Kräften gleicher Richtung aber unterschiedlicher Beträge ausgesetzt werden. Die hieraus resultieren Kräfte zwischen den beiden den äußeren Kräften ausgesetzten Artikeln 03 sind eine erste Kraft in der gemeinsamen Richtung der beiden äußeren Kräfte und eine dieser entgegengesetzte, zweite Kraft, die vom Betrage nach der Differenz der beiden äußeren Kräfte entsprechen (Fig. 7).

Alternativ können die erste und die zweite Kraft auch durch ein Kräftepaar aus zwei dem Betrage nach gleich großen, jedoch in ihrer Richtung entgegengesetzte Kräfte erzeugt werden (Fig. 8).

Das Verfahren sieht ferner vor, dass zumindest die Reaktionen derjenigen Artikel 03 des Gebindes 01 auf die Krafteinwirkung in entgegengesetzten Richtungen bevorzugt sensorisch überwacht werden, welche jeweils momentan der Krafteinwirkung in entgegengesetzten Richtungen ausgesetzt sind.

Das Verfahren sieht außerdem vor, dass wenn bei der Überwachung festgestellt wird, dass sich die einer Krafteinwirkung in entgegengesetzten Richtungen ausgesetzten Artikel 03 gleich verhalten, auf eine ordnungsgemäß hergestellte Verklebung 02 zwischen den betroffenen Artikeln 03 rückgeschlossen wird. Wenn bei der Überwachung festgestellt wird, dass sich die einer Krafteinwirkung in entgegengesetzten Richtungen ausgesetzten Artikel 03 unterschiedlich verhalten, beispielsweise indem sich zumindest einer der Artikel 03 in Richtung der auf ihn einwirkenden Kraft von einem oder mehreren anderen Artikeln 03 beispielsweise über ein dem Verhältnis der Höhe der Krafteinwirkung und der Elastizität der Verklebung 02 proportionales Maß hinaus entfernt, sieht das Verfahren vor, dass auf eine mangelhaft hergestellte Verklebung 02 zwischen den betroffenen Artikeln 03 rückgeschlossen wird. Bei den betroffenen Artikeln 03 handelt es sich hierbei zumindest um die beiden der Krafteinwirkung in entgegengesetzten Richtungen ausgesetzten Artikel 03. Bei den betroffenen Artikeln 03 kann es sich jedoch auch um zwischen den einer Krafteinwirkung in entgegengesetzten Richtungen ausgesetzten Artikeln 03 angeordnete Artikel 03 des Gebindes 01 handeln, die ebenfalls einer Überwachung unterliegen können.

Das Verfahren kann außerdem vorsehen, dass diejenigen Gebinde 01, deren Verklebungen 02 bei der Prüfung zumindest als zum Teil mangelhaft identifiziert worden sind, von einer weiteren Behandlung ausgeschlossen werden, beispielsweise indem diese Gebinde ausgeschieden werden. Bereits vor dem Ausscheiden von Gebinden 01, deren Verklebungen 02 bei der Prüfung zumindest als zum Teil mangelhaft identifiziert worden sind, kann das Verfahren vorsehen, Artikel 03 die sich bei der Prüfung von einem verbleibenden Teil des Gebindes 01 gelöst haben, direkt ausgeschieden und beispielsweise einem Sammelbehälter zugeführt werden.

Erfindungsgemäß sieht das Verfahren vor, dass die Krafteinwirkung in entgegengesetzten Richtungen unter gleichzeitiger, bevorzugt sensorischer Überwachung der Reaktionen zumindest der jeweils der Krafteinwirkung in entgegengesetzten Richtungen ausgesetzten Artikel 03, während eines Transports eines zuvor durch Herstellung der Verklebungen 02 zwischen seinen Artikeln 03 ganz (im fertigen Zustand frei von einer Umfassung ausgeführte) oder teilweise (im fertigen Zustand mit einer Umfassung ausgeführte) fertiggestellten Gebindes 01 zu einem weiteren Umgang mit dem Gebinde 01 stattfindet.

Die Krafteinwirkung in entgegengesetzten Richtungen liegt bevorzugt innerhalb durch die Verklebungen 02 bei gewöhnlichem Umgang mit dem Gebinde 01 zu ertragenden Grenzen, wie sie beispielsweise beim Anheben und/oder Verschieben und/oder Absetzen des Gebindes 01 auftreten.

Um sicherzustellen, dass die Krafteinwirkung in entgegengesetzten Richtungen innerhalb der durch die Verklebungen 02 bei gewöhnlichem Umgang mit dem Gebinde 01 zu ertragenden Grenzen liegt, kann das Verfahren vorsehen, dass die beim Umgang mit dem Gebinde 01 auftretenden Kräfte beispielsweise experimentell oder rechnerisch bestimmt werden und die eine entsprechende Krafteinwirkung bei der Prüfung bewirkenden Kräfte dem Betrage und bevorzugt auch der Richtung nach entsprechend der experimentellen oder rechnerischen Bestimmung vorgegeben werden.

Bei einer solchen Vorgehensweise, bei der die Kräfte, denen das Gebinde 01 bei der Prüfung der zwischen seinen Artikeln 03 hergestellten Verklebungen 02 ausgesetzt wird, im Voraus bestimmt und vorgegeben werden, kann das Verfahren beispielsweise vorsehen, dass zumindest zwei Artikel 03 beispielsweise an der Peripherie der Gebindeanordnung des ganz (im fertigen Zustand frei von einer Umfassung ausgeführte) oder teilweise (im fertigen Zustand mit einer Umfassung ausgeführte) fertigen Gebindes 01, beispielsweise zwei benachbarte Artikel 03 einer äußeren Reihe 04 oder einer äußeren Zeile 05 des Gebindes 01, oder jeweils einen Artikel 03 zweier gegenüberliegender äußerer Reihen 04 oder zweier gegenüberliegender äußerer Zeilen 04 des Gebindes mit jeweils einer vorgegebenen Kraft in entgegengesetzten Richtungen gedrückt oder gezogen werden, beispielsweise indem sie jeweils vermittels einer vorgegebenen Klemmkraft gegriffen und in entgegengesetzten Richtungen gedrückt und/oder gezogen werden, wodurch die Verklebungen zwischen den Artikeln, die in entgegengesetzten Richtungen gedrückt und/oder gezogen werden, jeweils Zug- und/oder Scherbelastungen erfahren, wie sie beim Quetschen, Schieben oder Ziehen des Gebindes mit der vorgegebenen Kraft, welche dem Produkt der vorgegebenen Klemmkraft mit dem Haftreibungskoeffizienten zwischen der Mantelfläche der Artikel und einer die Klemmkraft aufbringenden Einrichtung entspricht, auftreten.

Bei einer solchen Vorgehensweise, bei der die Kräfte, denen das Gebinde 01 bei der Prüfung der zwischen seinen Artikeln 03 hergestellten Verklebungen 02 ausgesetzt wird, im Voraus bestimmt und vorgegeben werden, kann das Verfahren beispielsweise vorsehen, dass mindestens zwei Artikel 03 zweier unterschiedlicher Reihen 04 oder Zeilen 05 des ganz (im fertigen Zustand frei von einer Umfassung ausgeführte) oder teilweise (im fertigen Zustand mit einer Umfassung ausgeführte) fertigen Gebindes 01 in einem Bereich B nahe der durch die Unterseiten 07 der Artikel 03 des Gebindes 01 gebildeten Aufstandsfläche oder wie in Fig. 10 dargestellt in einem Bereich B nahe der durch die Oberseiten 08 der Artikel des Gebindes gebildeten Oberfläche des Gebindes 01 (Fig. 3), in welchem Bereich B die Mantelflächen der miteinander durch Verklebungen 02 verbundenen Artikel 03 des Gebindes 01 in der Gebindeanordnung nicht mehr zusammenstoßen, einer durch Pfeile P angedeuteten Klemmkraft vorgegebener Höhe ausgesetzt werden. Hierdurch erfährt mindestens eine von der Aufstandsfläche oder von der Oberfläche entfernt angeordnete Verklebung 02 zwischen miteinander verbundenen Artikeln 03 benachbarter Reihen 04 oder Zeilen 05 eine Zugbelastung. In Fig. 10 ist dies die von der Oberfläche entfernt angeordnete, untere Verklebung 22.

Um sicherzustellen, dass die Krafteinwirkung in entgegengesetzten Richtungen innerhalb der durch die Verklebungen 02 bei gewöhnlichem Umgang mit dem Gebinde 01 zu ertragenden Grenzen liegt, kann das Verfahren vorsehen, dass das ganz (im fertigen Zustand frei von einer Umfassung ausgeführte) oder teilweise (im fertigen Zustand mit einer Umfassung ausgeführte) fertige Gebinde 01 aufrecht stehend mit seiner durch die Unterseiten 07 der Artikel 03 des Gebindes 01 gebildeten Aufstandsfläche über eine konvexe Welle 10 oder zumindest eine konvexe Partie 11 einer Welle 10, oder über eine konvexe Kante 15 bewegt wird, welche zwischen zwei benachbarten Reihen 04 oder Zeilen 05 des Gebindes 01 verläuft (Fig. 11). Hierdurch wird zwischen den Artikeln 03 der benachbarten Reihen 04 oder Zeilen 05 eine Krafteinwirkung in entgegengesetzten Richtungen erzeugt, welche mindestens eine von der Aufstandsfläche entfernt angeordnete obere Verklebung 21 zwischen miteinander verbundenen Artikeln 03 benachbarter Reihen 04 oder Zeilen 05 einer innerhalb der bei gewöhnlichem Umgang mit dem Gebinde 01 auftretenden Belastungen liegenden Zugbelastung aussetzt.

Um sicherzustellen, dass die Krafteinwirkung in entgegengesetzten Richtungen innerhalb der durch die Verklebungen 02 bei gewöhnlichem Umgang mit dem Gebinde 01 zu ertragenden Grenzen liegt, kann das Verfahren vorsehen, dass das ganz (im fertigen Zustand frei von einer Umfassung ausgeführte) oder teilweise (im fertigen Zustand mit einer Umfassung ausgeführte) fertige Gebinde 01 aufrecht stehend mit seiner durch die Unterseiten 07 der Artikel 03 des Gebindes 01 gebildeten Aufstandsfläche über eine konkave Welle 10 oder zumindest eine konkave Partie 12 einer Welle 10, oder entsprechend beispielsweise U- oder V-förmige und dadurch konkav ausgebildete Kerbe bewegt wird, welche zwischen zwei benachbarten Reihen 04 oder Zeilen 05 des Gebindes 01 verläuft. Zwischen den Artikeln 03 der benachbarten Reihen 04 oder Zeilen 05 wird dadurch eine Krafteinwirkung in entgegengesetzten Richtungen erzeugt, welche mindestens eine zu der Aufstandsfläche benachbarte oder mindestens eine zwischen der Aufstandsfläche und einer von der Aufstandsfläche entfernt angeordneten oberen Verklebung 21 vorgesehene untere Verklebung 22 zwischen miteinander verbundenen Artikeln 03 benachbarter Reihen 04 oder Zeilen 05 einer innerhalb der bei gewöhnlichem Umgang mit dem Gebinde 01 auftretenden Belastungen liegenden Zugbelastung aussetzt (Fig. 3).

Bei der Bewegung über die konkave Welle 10 bzw. über die konkave Partie 12 der Welle oder über die U- oder V-förmige Kerbe steht das Gebinde 01 an gegenüberliegenden Seiten an der Peripherie der Gebindeanordnung auf einer Transporteinrichtung 120 auf. Bei nur einer über die Höhe der Artikel 03 des Gebindes 01 angeordneten Verklebung 02 bzw. nur einem über die Höhe der Artikel 03 des Gebindes 01 angeordnetem Klebepunkt 20 findet hierdurch eine Belastung der zwischen den gegenüberliegenden Seiten angeordneten Verklebungen 02 auf Zug statt. Bei zwei oder mehr über die Höhe der Artikel 03 des Gebindes 01 verteilt angeordneten Verklebungen 02 bzw. Klebepunkten 20 findet hierdurch eine Belastung der dazwischen liegenden, unteren Verklebungen 22 auf Zug statt.

Um sicherzustellen, dass die Krafteinwirkung in entgegengesetzten Richtungen innerhalb der durch die Verklebungen 02 bei gewöhnlichem Umgang mit dem Gebinde 01 zu ertragenden Grenzen liegt, kann das Verfahren vorsehen, dass das ganz (im fertigen Zustand frei von einer Umfassung ausgeführte) oder teilweise (im fertigen Zustand mit einer Umfassung ausgeführte) fertige Gebinde 01 mit seinen Reihen 04 oder Zeilen 05 auf getrennten, beispielsweise als Transporteinrichtungen 120 in Form von Bandförderern 121 oder Rollenförderern ausgeführten Fördermitteln aufstehend transportiert wird, wobei zumindest zwei Fördermittel zumindest abschnittsweise voneinander abweichende Bewegungsbahnen 122, 123 beschreiben (Fig. 4, Fig. 9) oder zumindest abschnittsweise voneinander abweichende Bewegungsgeschwindigkeiten aufweisen (Fig. 6, Fig. 7), wodurch die Verklebungen 02 zwischen den Artikeln der auf unterschiedlichen Fördermitteln aufstehenden Reihen 04 oder Zeilen 05 des Gebindes 01 jeweils Zug- und/oder Scherbelastungen erfahren, wie sie beim Schieben oder Ziehen des Gebindes 01 über eine Fläche mit einem den Förderflächen der Fördermittel entsprechenden Haftreibungskoeffizienten vorkommen.

Um sicherzustellen, dass die Krafteinwirkung in entgegengesetzten Richtungen innerhalb der durch die Verklebungen 02 bei gewöhnlichem Umgang mit dem Gebinde 01 zu ertragenden Grenzen liegt, kann das Verfahren vorsehen, dass das ganz (im fertigen Zustand frei von einer Umfassung ausgeführte) oder teilweise (im fertigen Zustand mit einer Umfassung ausgeführte) fertige Gebinde 01, wie beispielsweise in Fig. 5 dargestellt, über eine Strecke transportiert wird, welche mindestens eine Lücke 17 aufweist, deren Abmessungen zumindest der Erstreckung wenigstens eines Artikels 03 des Gebindes 01 längs und quer zu einer Transportrichtung F entspricht, so dass wenn sich ein oder mehrere Artikel 03 des Gebindes 01 über der zumindest einen Lücke 17 befinden, die Verklebungen 02 dieser Artikel 03 mit ihren benachbarten Artikeln 03, die sich nicht über der Lücke befinden, Scherbelastungen erfahren, die einem manuellen Anheben des Gebindes 01 beispielsweise an einem Tragegriff 06 entsprechen.

Die verschiedenen Möglichkeiten, die das Verfahren zur Erzeugung der Krafteinwirkung in entgegengesetzten Richtungen vorsehen kann, können auch miteinander kombiniert werden, beispielsweise um unterschiedliche Verklebungen 02 oder beispielsweise neuralgische Klebepunkte 20 einzelner oder mehrerer Verklebungen 02 innerhalb des Gebindes 01 gezielt zu prüfen, ebenso wie den Zusammenhalt der Artikel 03 im Gebinde 01 im Allgemeinen.

Eine Überwachung der Reaktionen zumindest derjenigen Artikel 03 des Gebindes 01 auf die Krafteinwirkung, welche jeweils momentan der Krafteinwirkung ausgesetzt sind, erfolgt bevorzugt sensorisch und berührungsfrei.

Eine in Fig. 4, Fig. 5, Fig. 6, Fig. 7, Fig. 8, Fig. 9 und Fig. 11 ganz oder teilweise dargestellte und zur Durchführung eines zuvor beschriebenen Verfahrens geeignete Vorrichtung 100 zur Prüfung der Verklebungen 02 zwischen den Artikeln 03 eines Gebindes 01 aus in mindestens einer Reihe 04 und/oder mindestens einer Zeile 05 zu mindestens zwei Artikeln 03 unmittelbar miteinander durch Verklebungen 02 verbundenen Artikeln 03 weist Prüfmittel 101 auf, welche nach der Herstellung der Verklebungen 02 der Artikel 03 des Gebindes 01 untereinander wenigstens zwei unmittelbar miteinander oder mittelbar über einen oder mehrere dazwischen angeordnete Artikel 03 miteinander durch mindestens eine Verklebung 02 verbundene Artikel 03 beispielsweise der selben Reihe 04 oder der selben Zeile 05 oder benachbarter Reihen 04 und/oder Zeilen 05 des Gebindes 01 einzeln und/oder gruppenweise einer Krafteinwirkung in entgegengesetzten Richtungen aussetzen und die Reaktion der Artikel 03 des Gebindes 01 hierauf überwachen und auswerten.

Die Prüfmittel 101 umfassen Krafteinwirkungsmittel 110, welche mindestens ein in entgegengesetzten Richtungen auf zumindest zwei Artikel 03 des Gebindes 01 einwirkendes, beispielsweise in Fig. 7, Fig. 8 und Fig. 10 durch Pfeile P angedeutetes Kräftepaar erzeugen, von welchem Kräftepaar eine erste Kraft auf einen ersten Artikel 03 miteinander durch eine Verklebung 02 verbundener Artikel 03 und ein zweite, der ersten Kraft entgegengerichtete Kraft auf einen zweiten Artikel 03 miteinander durch eine Verklebung 02 verbundener Artikel 03 in derart entgegengesetzten Richtungen einwirkt, dass wenigstens eine Verklebung 02 bzw. wenigstens ein Klebepunkt 20 einer durch einen oder mehrere Klebepunkte 20 gebildeten Verklebung 02 zwischen dem ersten und dem zweiten Artikel 03 eine Zug- und/oder Scherbeanspruchung und/oder eine Momentenbeanspruchung erfährt.

Hinsichtlich der Kräfte und deren Erzeugungsmöglichkeiten gilt hinsichtlich der Vorrichtung 100 auch das bereits zum Verfahren gesagte.

Die Krafteinwirkungsmittel 110 umfassen mindestens eine beispielsweise als Bandförderer 121 oder als Rollenförderer ausgebildete Transporteinrichtung 120 zum Transport mindestens eines zuvor ganz (im fertigen Zustand frei von einer Umfassung ausgeführte) oder teilweise (im fertigen Zustand mit einer Umfassung ausgeführte) fertiggestellten Gebindes 01 beispielsweise zu einem weiteren Umgang mit einem oder mehreren Gebinden 01.

Die Krafteinwirkungsmittel 110 können alternativ oder zusätzlich wie in Fig. 11 a) und in Fig. 11 b) dargestellt mindestens eine beispielsweise in einer Transporteinrichtung 120 ausgebildete konvexe Welle 10 bzw. mindestens eine Welle 10 mit mindestens einer konvexen Partie 11 und/oder mindestens eine Kante 15 umfassen. Die konvexe Partie 11 der Welle 10 und die Kante 15 können beispielsweise entsprechend dem Verlauf der Reihen 04 und der Zeilen 05 im Gebinde 01 zueinander in Bezug zur Transportrichtung F und in Bezug zur Orientierung der Reihen 04 und Zeilen 04 der vermittels der Transporteinrichtung 120 transportierten Gebinde 01 in der Transporteinrichtung 120 angeordnet sein, um dementsprechend Verklebungen 02 zwischen benachbarten Reihen 04 und Zeilen 05 zu prüfen. Vermittels bzw. auf der Transporteinrichtung 120 wird das ganz (im fertigen Zustand frei von einer Umfassung ausgeführte) oder teilweise (im fertigen Zustand mit einer Umfassung ausgeführte) fertige Gebinde 01 aufrecht stehend mit seiner durch die Unterseiten 07 der Artikel 03 des Gebindes 01 gebildeten Aufstandsfläche transportiert und in einer Transportrichtung F fortbewegt. Die konvexe Welle 10 bzw. die konvexe Partie 11 der Welle 10 und/oder die Kante 15 ist dabei derart in Bezug zur Transporteinrichtung F ausgebildet bzw. ausgerichtet, dass das Gebinde 01 die konvexe Welle 10 bzw. die konvexe Partie 11 der Welle 10 oder die Kante 15 während seines Transports in Transportrichtung F so passiert, dass die konvexe Welle 10 bzw. die konvexe Partie 11 der Welle 10 und/oder die Kante 15 zwischen den Artikeln 03 zweier benachbarter Reihen 05 oder Zeilen 04 des Gebindes 01 verläuft. Die Artikel 03 in den benachbarten Reihen 04 oder Zeilen 05, zwischen denen die Welle 10 und/oder Kante 15 verläuft, während das Gebinde 01 sie passiert, erfahren dabei eine Krafteinwirkung in entgegengesetzten Richtungen, welche mindestens eine von der Aufstandsfläche entfernt angeordnete Verklebung 02, beispielsweise eine obere Verklebung 22 bzw. ein zur Oberseite 08 benachbarter Klebepunkt 20 einer beispielsweise durch mehrere Klebepunkte 20 gebildeten Verklebung 02 zwischen miteinander verbundenen Artikeln 03 der benachbarten Reihen 04 oder Zeilen 05 einer innerhalb der bei gewöhnlichem Umgang mit dem Gebinde auftretenden Belastungen liegenden Zugbelastung aussetzt, weil durch die spezielle Art der Erzeugung der Krafteinwirkung auf die Verklebungen 02 eine der Gewichtskraft der Artikel 03 des Gebindes 01 proportionale Belastung einwirkt.

Die Krafteinwirkungsmittel 110 können alternativ oder zusätzlich wie in Fig. 11 a) dargestellt mindestens eine beispielsweise in einer Transporteinrichtung 120 ausgebildete konkave Welle 10 bzw. mindestens eine Welle 10 mit mindestens einer konkaven Partie 11 und/oder mit mindestens einer U- oder V-förmigen, konkaven Kerbe umfassen. Die konkave Partie 12 der Welle 10 und die Kerbe können beispielsweise entsprechend dem Verlauf der Reihen 04 und der Zeilen 05 im Gebinde 01 zueinander in Bezug zur Transportrichtung F und in Bezug zur Orientierung der Reihen 04 und Zeilen 04 der vermittels der Transporteinrichtung 120 transportierten Gebinde 01 in der Transporteinrichtung 120 angeordnet sein, um dementsprechend Verklebungen 02 zwischen benachbarten Reihen 04 und Zeilen 05 zu prüfen. Auch hier wird das ganz (im fertigen Zustand frei von einer Umfassung ausgeführte) oder teilweise (im fertigen Zustand mit einer Umfassung ausgeführte) fertige Gebinde 01 auf bzw. vermittels der Transporteinrichtung 120 aufrecht stehend mit seiner durch die Unterseiten 07 der Artikel 03 des Gebindes 01 gebildeten Aufstandsfläche transportiert und in einer Transportrichtung F fortbewegt. Die konkave Welle und/oder Kerbe ist dabei derart in Bezug zur Transporteinrichtung F ausgebildet, dass das Gebinde 01 die konkave Welle 10 bzw. die konkave Partie 12 der Welle 10 und/oder die Kerbe während seines Transports in Transportrichtung F so passiert, dass die konkave Welle 10 bzw. die konkave Partie 12 der Welle 10 und/oder Kerbe zwischen zwei benachbarten Reihen 05 oder Zeilen 05 des Gebindes 01 verläuft. Auch hierbei wird durch die Einwirkung ausschließlich der Gewichtskraft der Artikel 03 des Gebildes 01 zwischen den Artikeln 03 der benachbarten Reihen 04 oder Zeilen 05 eine Krafteinwirkung in entgegengesetzten Richtungen erzeugt, welche mindestens eine zu der Aufstandsfläche benachbarte mittlere Verklebung 23 oder mindestens eine zwischen der Aufstandsfläche und einer von der Aufstandsfläche entfernt angeordneten, oberen Verklebung 21 vorgesehene untere Verklebung 22 einer durch mehrere über die Höhe der Artikel 03 verteilt angeordnete Klebepunkte gebildeten Verklebung 02 zwischen miteinander verbundenen Artikeln 03 benachbarter Reihen 04 oder Zeilen 05 einer innerhalb der bei gewöhnlichem Umgang mit dem Gebinde 01 auftretenden Belastungen liegenden Zugbelastung aussetzt.

Es kann auch ein zusätzlicher Niederhalter eingesetzt werden, um die Gebinde 01 neben der Gewichtskraft einer zusätzlichen Kraft auszusetzen, wenn sie über eine konvexe Partie 11 oder konkave Partie 12 gefahren werden. Der Niederhalter kann beispielsweise einen Transportriemen aufweisen, der in der gleichen Geschwindigkeit wie das Förderband umläuft und welcher derart angeordnet ist, dass zumindest zwei benachbarte Artikel 03 oder alle Artikel 03 im Gebinde 01 im Bereich beispielsweise der konkaven Partie 12 der Welle 10 und/oder der Kerbe auf das Förderband gedrückt werden.

Die Krafteinwirkungsmittel 110 können alternativ oder zusätzlich wie in Fig. 4 oder wie in Fig. 9 dargestellt zwei oder mehr abschnittsweise parallel verlaufende, beispielsweise jeweils als Bandförderer 121 (Fig. 4), oder als entlang von Schienen 125 beweglich angeordneter Linearantriebe 126, beispielsweise in Form von Magnetshuttles ausgebildete Transporteinrichtungen 120 umfassen. Im Falle zweier oder mehrerer abschnittsweise parallel verlaufender, beispielsweise jeweils als Bandförderer 121 (Fig. 4) ausgebildeter Transporteinrichtungen 120 wird das ganz (im fertigen Zustand frei von einer Umfassung ausgeführte) oder teilweise (im fertigen Zustand mit einer Umfassung ausgeführte) fertige Gebinde 01 auf den Transporteinrichtungen 120 aufrecht stehend mit seiner durch die Unterseiten 07 der Artikel 03 des Gebindes 01 gebildeten Aufstandsfläche transportiert und in einer Transportrichtung F fortbewegt. Je nachdem, ob die Reihen 04 oder die Zeilen 05 des Gebindes 01 parallel zur Transportrichtung F orientiert sind, werden bei parallel zur Transportrichtung F orientierten Reihen 04 des Gebindes 01 zumindest zwei Reihen 04, vorzugsweise jede Reihe 04 des Gebindes 01, und bei parallel zur Transportrichtung F orientierten Zeilen 05 des Gebindes 01 zumindest zwei Zeilen 05, vorzugsweise jede Zeile 05 des Gebindes 01 von einer eigenen Transporteinrichtung 120 abgestützt.

Entlang des von den Transporteinrichtungen 120 beschriebenen Transportwegs sind Abschnitte 124 vorgesehen, in denen der Abstand zwischen den einzelnen Transporteinrichtungen 120 vergrößert ist, so dass die parallelen Transporteinrichtungen 120 abschnittsweise unterschiedliche Bewegungsbahnen 122, 123 aufweisen. Da im Falle zweier oder mehrerer abschnittsweise parallel verlaufender, beispielsweise jeweils als Bandförderer 121 (Fig. 4) ausgebildeter Transporteinrichtungen 120 das Gebinde 01 mit seiner Gewichtskraft auf den parallelen Transporteinrichtungen 120 verteilt aufsteht, wird bei einer Bewegung in Transportrichtung F gesehen durch die Vergrößerung des Abstands zwischen den einzelnen Transporteinrichtungen 120 auf die Verklebungen 02 zwischen den Artikeln 03 von auf unterschiedlichen Transporteinrichtungen 120 abgestützten Reihen 04 oder Zeilen 05 des Gebindes 01 eine Zugbelastung in Form einer Zugkraft aufgebracht, wie sie beim Ziehen des fertigen Gebindes 01 über eine Fläche mit einem den Förderflächen der Transporteinrichtungen 120 entsprechenden Haftreibungskoeffizienten vorkommt.

Auf den Förderflächen können Haftmittel vorgesehen sein bzw. den Haftreibungskoeffizienten zwischen Förderfläche und Artikel 03 eines Gebindes 01 erhöhende Maßnahmen getroffen sein, um die Reibung zu erhöhen. Die Haftmittel können durch auf den Förderflächen angeordnete Gumminoppen gebildet werden.

Im Falle der als entlang von Schienen 125 beweglich angeordneten Linearantrieben 126 ausgebildeten Transporteinrichtungen 120 können zwischen den Linearantrieben 126 und an diesen angeordneten, jeweils zur Aufnahme eines Artikels 03 einer äußeren Reihe 04 oder einer äußeren Zeile 05 an der Peripherie der Gebindeanordnung des Gebindes 01 vorgesehenen Greifern 112 Federn 128 vorgegebener Federhärte vorgesehen sein, um eine durch die Federhärte und die maximale Auslenkung der Linearantriebe 126 im Bereich der Abschnitte 124 vorgegebene Kraft zu erzeugen, welche die Artikel 03 des Gebindes 01 entlang der Abschnitte 124 auseinander zieht und dadurch die zwischen den Artikeln 03 unterschiedlicher Reihen 04 oder Zeilen 05 liegenden Verklebungen 02 einer vorgegebenen Zugbeanspruchung aussetzt.

Zwischen den Greifern 112 und den Linearantrieben 126 angeordnete Näherungssensoren 131 können dabei einer Überwachung dienen, ob die Verklebungen 02 der Zugbeanspruchung standhalten, oder nicht.

Die Krafteinwirkungsmittel 110 können alternativ oder zusätzlich wie in Fig. 6 dargestellt zwei oder mehr abschnittsweise parallel verlaufende, beispielsweise durch je einen Bandförderer 121 gebildete Transporteinrichtungen 120 umfassen, auf welchen Transporteinrichtungen 120 das ganz (im fertigen Zustand frei von einer Umfassung ausgeführte) oder teilweise (im fertigen Zustand mit einer Umfassung ausgeführte) fertige Gebinde 01 aufrecht stehend mit seiner durch die Unterseiten 07 der Artikel 03 des Gebindes 01 gebildeten Aufstandsfläche transportiert und in einer Transportrichtung F fortbewegt wird. Je nachdem, ob die Reihen 04 oder die Zeilen 05 des Gebindes 01 parallel zur Transportrichtung F orientiert sind, werden bei parallel zur Transportrichtung F orientierten Reihen 04 des Gebindes 01 zumindest zwei Reihen 04, vorzugsweise jede Reihe 04 des Gebindes 01, und bei parallel zur Transportrichtung F orientierten Zeilen 05 des Gebindes 01 zumindest zwei Zeilen 05, vorzugsweise jede Zeile 05 des Gebindes 01, von einer eigenen Transporteinrichtung 120 abgestützt. Die Transporteinrichtungen 120 weisen zumindest zeitweilig unterschiedliche Transportgeschwindigkeiten auf. Durch unterschiedliche Bewegungs- bzw. Transportgeschwindigkeiten der einzelnen Transporteinrichtungen 120 erfahren die Verklebungen 02 zwischen den Artikeln 03 von auf unterschiedlichen Transporteinrichtungen 120 abgestützten Reihen 04 bzw. Zeilen 05 des Gebindes 01 eine Scherbelastung in Form einer Scherkraft, wie sie beim Schieben des fertigen Gebindes 01 über eine Fläche mit einem den Förderflächen der Transporteinrichtungen 120 entsprechenden Haftreibungskoeffizienten vorkommt. Hierbei wird eine der Gewichtskraft des Gebindes 01 proportionale Krafteinwirkung erzeugt, wie sie bei normalem Umgang mit dem Gebinde 01 auftritt.

Die Krafteinwirkungsmittel 110 können alternativ oder zusätzlich wie in Fig. 5 dargestellt mindestens zwei in einer Transportrichtung F hintereinander angeordnete Transporteinrichtungen 120 umfassen, zwischen denen wenigstens eine Lücke 17 ausgebildet ist. Eine solche Anordnung bildet ein Paar 129 von in Transportrichtung F durch die mindestens eine Lücke 17 unterbrochen aneinander anschließenden Transporteinrichtungen 120. Die Abmessungen der Lücke 17 entsprechen zumindest der Erstreckung wenigstens eines Artikels des Gebindes längs und quer zur Transportrichtung. Wenn sich ein oder mehrere Artikel des fertigen Gebindes über der zumindest einen Lücke befinden, erfahren die Verklebungen dieser Artikel mit ihren benachbarten Artikeln durch die Gewichtskraft des oder der sich momentan über der Lücke befindenden Artikel Scherbelastungen, die einem manuellen Anheben des Gebindes beispielsweise an einem Tragegriff entsprechen. Hierbei ist denkbar, dass mehrere parallel angeordnete Paare von in Transportrichtung durch die mindestens eine Lücke unterbrochen aneinander anschließenden Transporteinrichtungen vorgesehen sind, beispielsweise ein Paar je Reihe oder Zeile des Gebindes, abhängig von dessen Orientierung in Bezug auf die Transportrichtung.

Alternativ oder zusätzlich können die Krafteinwirkungsmittel 110 wie in Fig. 10 durch die Pfeile P angedeutet mindestens zwei Aktoren 113 umfassen, welche beispielsweise mit einem Gebinde 01 in Transportrichtung F einer Transporteinrichtung 120 beweglich angeordnet sein können. Die Aktoren 113 können mindestens zwei Artikel 03 zweier unterschiedlicher, bevorzugt äußerer Reihen 04 oder Zeilen 05 des Gebindes 01 in einem Bereich B nahe der durch die Unterseiten 07 der Artikel 03 des Gebindes 01 gebildeten Aufstandsfläche oder in einem Bereich B nahe der durch die Oberseiten 08 der Artikel 03 des Gebindes 01 gebildeten Oberfläche des Gebindes 01 einer Klemmkraft aussetzen. In dem Bereich B stoßen die zumindest an den Klebepunkten 20 der Verklebungen 02 einander berührenden Mantelflächen der miteinander durch Verklebungen 02 verbundenen Artikel 03 des Gebindes 01 in der Gebindeanordnung nicht mehr zusammen. Hierdurch erfährt mindestens eine von der Aufstandsfläche oder von der Oberfläche entfernt angeordnete Verklebung 02, beispielsweise eine obere Verklebung 21, eine untere Verklebung 22 und/oder eine mittlere Verklebung 23 zwischen miteinander verbundenen Artikeln 03 benachbarter Reihen 04 oder Zeilen 05 eine Zugbelastung. Die Aktoren 113 können das Gebinde 01 quer oder parallel zur Transportrichtung F einer Klemmkraft aussetzen.

Alternativ oder zusätzlich können die Krafteinwirkungsmittel 110 wie in Fig. 7, Fig. 8 und Fig. 9 dargestellt mindestens zwei jeweils mit wenigstens einem Artikel 03 des ganz (im fertigen Zustand frei von einer Umfassung ausgeführte) oder teilweise (im fertigen Zustand mit einer Umfassung ausgeführte) fertigen Gebindes 01 in Wechselwirkung bringbare Einwirkungselemente 111, beispielsweise in Form von beispielsweise an parallel zur Transportrichtung F und/oder quer hierzu unabhängig voneinander beweglichen Aktoren 113 angeordneten Greifern 112 (Fig. 7, Fig. 8), oder zwischen die Artikel 03 eintauchender Stifte oder Stiftepaare umfassen. Die Greifer 112 können beispielsweise durch Anordnung an die bereits erwähnten Aktoren 113 oder durch Anordnung an beispielsweise entlang von Bewegungsbahnen 122, 123 verlaufenden Schienen 125 beweglichen Linearantrieben 126 oder Magnetshuttles unabhängig voneinander mit einem Gebinde 01 in Transportrichtung F einer Transporteinrichtung 120 beweglich angeordnet sein. Werden die mit unterschiedlichen Artikeln 03 beispielsweise an der Peripherie der Gebindeanordnung des Gebindes 01 beispielsweise durch Eingriff in Wechselwirkung stehenden Einwirkungselemente 111 unterschiedlich beschleunigt, indem auf die verschiedenen Einwirkungselemente 111 beispielsweise dem Betrage und/oder der Richtung nach unterschiedliche Antriebskräfte aufgebracht werden, resultiert hieraus eine Krafteinwirkung in entgegengesetzten Richtungen auf die mit den Einwirkungselementen 111 in Wechselwirkung gebrachten Artikel 03 des Gebindes 01. Dadurch erfahren die Verklebungen 02 zwischen den Artikeln 03, die in entgegengesetzten Richtungen gedrückt und/oder gezogen werden, jeweils Zug- und/oder Scherbelastungen, wie sie beim Quetschen, Schieben oder Ziehen des fertigen Gebindes mit der aus den unterschiedlichen Antriebskräften resultierenden Kraft entspricht. Sind die Einwirkungselemente 111 beispielsweise als an entlang von Bewegungsbahnen 122, 123 verlaufenden Schienen 125 unabhängig voneinander beweglichen Linearantrieben 126 angeordnete Greifer 112 ausgebildet, aus denen wenigstens einer von zwei von unterschiedlichen Greifern 112 gegriffener Artikel 03 parallel zur Bewegungsrichtung der Einwirkungselemente 111 entweichen kann, so entspricht die resultierende Kraftmaximal dem Produkt einer vorgegebenen Klemmkraft der Greifer 112 mit dem Haftreibungskoeffizienten zwischen der Mantelfläche der Artikel 03 und den Greifern 112. Die Klemmkraft kann dementsprechend an eine resultierende Kraft in Höhe einer vorgegebenen Kraft angepasst werden. Ist ein Entweichen der Artikel 03 aus der Wechselwirkung der Einwirkungselemente 111 nicht möglich, beispielsweise weil die Greifer 111 quer zur Transportrichtung F des Gebindes 01 zwischen die Artikel 03 eingreifen, und/oder weil die Bewegungsrichtung der Linearantriebe 126 quer zu derjenigen Richtung verläuft, in welcher ein Entweichen einzig möglich wäre, so entspricht die resultierende Kraft der Differenz der Antriebskräfte der Linearantriebe 126.

Die Prüfmittel 101 umfassen außerdem bevorzugt Überwachungsmittel 130, welche Ausgangssignale erzeugen, von denen jedes einer durch eine Bewegung und/oder eine Positionsänderung gebildeten Reaktion eines Artikels 03 zumindest derjenigen überwachten Artikel 03 des Gebindes 01 proportional ist, welche momentan der Krafteinwirkung in entgegengesetzten Richtungen ausgesetzt sind.

Die Überwachungsmittel 130 können Sensoren oder Einrichtungen umfassen, die durch Kontakt mit den überwachten Artikeln 03 oder berührungsfrei, beispielsweise optisch, deren Reaktion auf die Krafteinwirkung erfassen.

Besonders bevorzugt umfassen die Überwachungsmittel 130 einen oder mehrere auch als berührungsfreie Sensoren bezeichnete Näherungsschalter 131 vorzugsweise aus der Gruppe:
- induktive Näherungsschalter, welche sowohl bei ferromagnetischen, als auch bei nichtmagnetischen aber metallischen Gegenständen auf das Auftreten eines Wirbelstroms reagieren,
- kapazitive Näherungsschalter, welche auch auf nicht leitende Werkstoffe reagieren,
- magnetische Näherungsschalter, wie beispielsweise Reedschalter oder Reedkontakte oder auch Hall-Sensoren, welche auf ein Magnetfeld und/oder dessen Änderung reagieren,
- optische Näherungsschalter, welche auf Lichtreflexion reagieren,
- Lichtschranken, welche auf eine Unterbrechung eines Lichtstrahls reagieren,
- Ultraschallsensoren, welche die Reflexion eines Ultraschallsignals an einem Hindernis auswerten,
- elektromagnetische Näherungsschalter, welche sowohl auf leitende als auch auf nicht leitende Werkstoffe reagieren und bei denen sich durch eine Annäherung die Schwingfrequenz eines Schwingkreisen ändert.

Alternativ oder zusätzlich können die Überwachungsmittel 130 einen oder mehrere Kontaktschalter und/oder mindestens eine Videokamera nebst mindestens einen Bilderkennungsalgorithmus ausführender Bilderfassungsmittel umfassen. Bei letztgenanntem kann mindestens eine mit einer Videokamera verbundene Datenverarbeitungseinrichtung und/oder mindestens ein mit mindestens einer Videokamera verbundener Mikroprozessor vorgesehen sein, welche bzw. welcher den Bilderkennungsalgorithmus ausführt. Mit dem Bilderkennungsalgorithmus sind die einzelnen Artikel 03 des Gebindes 01 im erfassten Videobild identifizierbar. Dadurch können deren Reaktionen auf die Krafteinwirkung in Echtzeit überwacht werden.

Die Überwachungsmittel 130 erzeugen bevorzugt ein oder mehrere Ausgangssignale, von denen jedes der Position eines überwachten Artikels 03 relativ zum Gebinde 01 proportional ist. Beispielsweise können die Ausgangssignale einer Annäherung oder einer Entfernung eines überwachten Artikels 03 von einer beispielsweise vorgegebenen Sollposition des jeweiligen Artikels 03 im Gebinde 01 oder beispielsweise von einem Mittelwert der ebenfalls erfassten Positionen der verbleibenden oder aller Artikel 03 des Gebindes 01 proportional sein.

Die Überwachungsmittel 130 sind bevorzugt in Abhängigkeit von der Ausführung der Krafteinwirkungsmittel angeordnet. Beispielsweise bei Krafteinwirkungsmitteln 110, die eine Lücke 17 zwischen Transporteinrichtungen 120 umfassen, über welche ein Gebinde 01 transportiert wird, umfassen die Überwachungsmittel 130 beispielsweise unterhalb und/oder seitlich der Lücke 17 angeordnete Näherungsschalter 131 und/oder Kontaktschalter.

Darüber hinaus umfassen die Prüfmittel 101 bevorzugt Auswertungsmittel 140, die mit den Überwachungsmitteln 130 verbunden sind und die Ausgangssignale der Überwachungsmittel 130 empfangen und auswerten. Die Auswertungsmittel 140 erzeugen zumindest:
- ein erstes Prüfsignal, welches ordnungsgemäß hergestellte Verklebungen 02 zwischen den überwachten Artikeln 03 anzeigt, wenn eine Auswertung der Ausgangssignale ergibt, dass sich die überwachten Artikel 03 gleich verhalten, entsprechend einer Gleichartigkeit der Ausgangssignale der Überwachungsmittel 130 oder einer Gleichartigkeit der Änderungen der Ausgangssignale der Überwachungsmittel 130 für verschiedene, überwachte Artikel 03 des Gebindes 01, zumindest innerhalb vorgegebener Grenzen, und
- ein zweites Prüfsignal, welches mangelhaft hergestellte Verklebungen 02 zwischen den überwachten Artikeln 03 anzeigt, wenn eine Auswertung der Ausgangssignale ergibt, dass sich die überwachten Artikel 03 unterschiedlich verhalten, beispielsweise indem sich zumindest einer der Artikel 03 in Richtung der auf ihn einwirkenden Kraft von einem oder mehreren verbleibenden Artikeln 03 des Gebindes 01 beispielsweise über ein dem Verhältnis der Höhe der Krafteinwirkung und der Elastizität der Verklebung 02 proportionales Maß hinaus entfernt. Das zweite Prüfsignal kann dementsprechend erzeugt und beispielsweise ausgegeben werden, wenn eine Gleichartigkeit der Ausgangssignale der Überwachungsmittel 130 oder einer Gleichartigkeit der Änderungen der Ausgangssignale der Überwachungsmittel 130 für verschiedene, überwachte Artikel 03 des Gebindes 01 zumindest innerhalb vorgegebener Grenzen nicht vorliegt.

Die Auswertungsmittel 140 können beispielsweise durch eine Datenverarbeitungseinrichtung und/oder einen Mikroprozessor gebildet sein oder eine bzw. einen solchen umfassen oder von einer bzw. einem solchen umfasst sein.

Die Auswertungsmittel 140 können im weiteren Verlauf der Transporteinrichtungen 120 angeordnete Weichen 141 und/oder Klappen steuern, über welche als mit mangelhaften Verklebungen 02 hergestellt identifizierte Gebinde 01 von der weiteren Verwendung aussortiert werden können.

Zusätzlich können bereits vor entsprechend gesteuerten Weichen 141 Ausleitungsmittel für bei der Prüfung aus einem Gebinde 01 herausgebrochene Artikel 03 vorgesehen sein. Im Falle einer Prüfung, bei der die Gebinde 01 über Lücken 17 bewegt werden (Fig. 5) kann dies beispielsweise besonders einfach durch die Aufstellung von Sammelbehältern 142 erfolgen, denen die durch die Lücken 17 hindurch gefallenen Artikel 03 zugeführt werden.

Wichtig ist hervorzuheben, dass bei der in Fig. 6 dargestellten Vorrichtung 100 die in Fig. 7 dargestellten Krafteinwirkungsmittel 110 und/oder die in Fig. 8 dargestellten Krafteinwirkungsmittel 110 in den Zusammenführungsmitteln 170 integriert sein können, so dass die in Fig. 6 dargestellte Vorrichtung 100 sämtliche Verklebungen 02 zwischen den Artikeln 03 eines Gebindes 01 untereinander einer Prüfung unterzogen werden können.

Das Verfahren und die Vorrichtung 100 können zur Überwachung der Reaktion der überwachten und der Krafteinwirkung in entgegengesetzten Richtungen ausgesetzten Artikel 03 auf die Krafteinwirkung vorsehen zu messen, ob zwei oder mehr Artikel 03 durch die Krafteinwirkung voneinander entfernt wurden, und/oder bei einer Krafteinwirkung durch eine vorgegebene Krafteinwirkung den Kraftverlauf zu messen. Anstelle einer Messung einer Annäherung bzw. eines Wegverlaufs kann je nach Gebinde 01 auch eine Messung einer Rotation um eine vorgegebene Achse entsprechend einem Drehbewegungsverlauf gemessen werden.

Bei der in Fig. 9 dargestellten Vorrichtung 100 ist die Krafteinwirkung durch die Federhärten der Federn 128 und durch die Auslenkung der entlang den Bewegungsbahnen 122, 123 verlaufenden Schienen 125 im Bereich der Abschnitte 124 vorgegeben. Erträgt eine Verklebung 02 die vorgegebene Kraft nicht und ist somit mangelhaft, zieht die jeweilige Feder 128 je einen der Artikel 03, der über die mangelhafte Verklebung 02 mit einem anderen Artikel verbunden ist zumindest ein Stück weit im Verhältnis zu den verbleibenden Artikeln 03 des Gebindes 01 zurück, was durch einen Näherungssensor 131 überwacht und durch Ausgabe eines diesem Ereignis proportionalen Ausgangssignal an Auswertungsmittel 140 festgestellt wird. Würden statt der Federn 128 in Fig. 9 beispielsweise elektromagnetische Aktoren 113 verwendet, wie in Fig. 8 dargestellt, deren Zug- und/oder Druckkraftverlauf ihrer Stromaufnahme proportional ist, so könnte auf den Näherungssensor 131 verzichtet werden und statt dessen die Stromaufnahme der Aktoren 113 überwacht werden. Ein plötzliches Absinken der Stromaufnahme eines oder mehrerer Aktoren 113 würde auf ein Versagen wenigstens einer Verklebung 02 rückschließen lassen. In diesem Fall kann auch auf die unterschiedlichen Bewegungsbahnen 122, 123 und die entsprechenden Abschnitte 124 verzichtet werden.

Ähnlich kann in Verbindung mit beispielsweise als Klammern ausgebildeten Greifern 112 vorgegangen werden, die an beispielsweise als Magnetshuttles ausgebildeten, unabhängig voneinander in Transportrichtung F beweglichen Linearantrieben 126 angeordnet sind. Bei einem als Magnetshuttle ausgebildeten Linearantrieb 126 befinden sich entlang der Schienen 125 der Linearantriebe 126 Spulen für den Antrieb der Magnetshuttles. Auf den Magnetshuttles sind Permanentmagnete angeordnet. Die Linearantriebe 126 sind bevorzugt kraft- und/oder weggesteuert. Über die Kraftsteuerung kann erkannt werden, ob beim Aufbringen einer eine Krafteinwirkung in entgegengesetzten Richtungen erzeugenden Prüfkraft das Gebinde 01 zusammenhält oder nicht. Sinkt die gemessene Prüfkraft schlagartig ab, so ist einer der Klebepunkte 20 gerissen und der Artikel 03 wurde aus dem Gebinde 01 herausgelöst. Über einen oder mehrere Positionssensoren in den Linearantrieben 126, und/oder mittels mindestens eines externen Sensors, wie etwa einer Videokamera mit Bilderkennung kann auch ein Entfernen der Artikel 03 eines Gebindes 01 voneinander festgestellt werden.

Wichtig ist hervorzuheben, dass sich auch zwei Klammern oder Greifer 112 auf den beispielsweise als Magnetshuttles ausgebildeten, unabhängig voneinander in Transportrichtung F beweglichen Linearantrieben 126 in unterschiedlichen Höhen angeordnet sein können. So können auch die einzelne Klebepunkte 20 in unterschiedlichen Höhen untersucht werden, indem beispielsweise eine Klammer auf einer Höhe relativ zum Gebinde 01 nicht bewegt wird und die andere schon - auf diese Weise kann ein einzelner Artikel 03 einer Kippbelastung relativ zum Gebinde 01 ausgesetzt werden und im Fall einer mangelhaften Verklebung 02 aus dem Gebinde 01 heraus gekippt werden.

Zuvor beschriebene Aktoren 113 bzw. deren Funktion können beispielsweise in eine beispielsweise letzte Anpresseinheit 171, besonders bevorzugt in umlaufende Klemmeinheiten 172 von beispielsweise ohnehin zur Herstellung der Verklebungen 02 zwischen den Artikeln 03 eines Gebindes 01 benötigten Zusammenführungsmitteln 170 integriert sein. Dadurch lässt sich zumindest eine erste Prüfung von Verklebungen 02 unmittelbar nach deren Herstellung durchführen.

Dementsprechend kann es vorteilhaft sein, wenn die Vorrichtung 100 wie insbesondere in Fig. 6 durch die durch eine gestrichelte Linie dargestellte Verbindung zwischen den Auswertemitteln 140 und den Zusammenführungsmitteln 170 angedeutet, Herstellungsmittel 150 zur Herstellung eines Gebindes 01 aus miteinander unmittelbar durch Verklebungen 02 miteinander verbundenen Artikeln 03 umfasst.

Die Herstellungsmittel 150 umfassen beispielsweise Bereitstellungsmittel 160 für eine der Anzahl R der Reihen 04 im fertigen Gebinde 01 entsprechende Zahl von Artikelsträngen 30 aus jeweils einer der Anzahl der Artikel 03 in den einzelnen Reihen 04 oder in der einzigen Reihe 04 im fertigen Gebinde entsprechenden Zahl von Artikeln 03, wie in Fig. 4 und in Fig. 6 dargestellt. Die Bereitstellungsmittel 160 können anstelle von Artikelsträngen 30 einzeln beispielsweise von einem oder mehreren Artikelströmen 31 abgetrennte Artikel 03 bereitstellen, wie in Fig. 5 angedeutet.

Die Bereitstellungsmittel 160 können einen Zulauf von einer der Anzahl R der Reihen 04 im fertigen Gebinde 01 entsprechenden Zahl von Artikelströmen 31 aus jeweils unmittelbar aufeinander folgenden Artikeln 03 umfassen. Die Bereitstellungsmittel 160 können außerdem je Artikelstrom 30 Abtrennungsmittel 161 umfassen, welche Abtrennungsmittel 161 einen Artikelstrang 30 mit einer der Anzahl von Artikeln 03 je Reihe 04 im fertigen Gebinde 01 vom jeweiligen Artikelstrom 30 entsprechende Zahl von Artikeln 03 vom jeweiligen Artikelstrom 31 abtrennen.

Die Abtrennungsmittel 161 können beispielsweise nach dem Prinzip arbeiten, wonach durch eine Beschleunigung der Artikel 03 eines von einem Artikelstrom 31 abzutrennenden Artikelstrangs 30 auf eine höhere Geschwindigkeit, als diejenige des Artikelstroms 31, der Artikelstrang 30 vom Artikelstrom 31 abgetrennt wird.

Die Herstellungsmittel 160 umfassen außerdem Anbringungsmittel 162, um einzelne, ausgewählte oder alle Artikel 03 des oder der Artikelstränge 30 zumindest an ihren in der Gebindeanordnung des fertigen Gebindes 01 mit mindestens einer Mantelfläche eines weiteren Artikels 03 zusammenstoßende Mantelflächen bzw. an Partien von ihren in der Gebindeanordnung des fertigen Gebindes 01 mit mindestens einer Mantelfläche eines weiteren Artikels 03 zusammenstoßenden Mantelflächen mit Klebepunkten 20 zu versehen.

Die Anbringungsmittel 162 können durch eine oder mehrere Düsen 163 verwirklicht sein, mittels denen zur Herstellung von Verklebungen 02 dienende Klebepunkte 20 auf die Mantelflächen zumindest ausgewählter Artikel 03 aufbringbar sind, aufgebracht werden oder aufgebracht werden können.

Die eine oder mehreren Düsen 163 können durch eine oder mehrere V-förmige Doppeldüsen verwirklicht sein, mit denen ein gleichzeitiger Auftrag von jeweils zwei oder mehreren Klebepunkten 20 auf einen Artikel 03 oder maximal ein gleichzeitiger Auftrag von jeweils einem Klebepunkt 20 auf eine der Anzahl der Düsenaustrittsöffnungen der Doppeldüsen entsprechende Zahl von Artikeln 03 möglich ist.

Eine durch eine Doppeldüse verwirklichte Düse 163 kann beispielsweise zwischen zwei noch nicht zusammengeführten Artikelsträngen 30 bzw. zwischen den Transportwegen zweier Artikelstränge 30 beispielsweise von deren Abtrennung von deren jeweiligem ursprünglichen Artikelstrom 31 zu deren Zusammenführung miteinander zu einem Gebinde 01 oder zu einem Zwischengebinde angeordnet sein, wo sie gleichzeitig einen Artikel 03 des einen Artikelstrangs 30 und einen Artikel 03 des anderen Artikelstrangs 30 mit je einem Klebepunkt 20 versehen kann.

Alternativ kann eine durch eine Doppeldüse verwirklichte Düse 163 seitlich eines noch nicht mit einem anderen Artikelstrang 30 zusammengeführten Artikelstrangs 30 bzw. seitlich dessen Transportwegs von der Abtrennung des Artikelstrangs 30 beispielsweise von dessen ursprünglichem Artikelstrom 31 bis zu dessen Zusammenführung mit einem oder mehreren anderen Artikelsträngen 30 zu einem fertigen Gebinde 01 oder einem Zwischengebinde angeordnet sein, wo sie einen Artikel 03 des Artikelstrangs 30 mit zwei beispielsweise entlang dessen sich normal zu einer parallel zu den Reihen 04 und Zeilen 05 im fertigen Gebinde 01 verlaufenden Ebene erstreckender Hochachse verteilt angeordneten Klebepunkten 20, oder zwei in ein und demselben Artikelstrang 30 aufeinander folgende Artikel 03 mit je einem Klebepunkt 20 versehen kann.

Die Verwendung von Doppel- oder Mehrfachdüsen als Düsen 163 verringert die Anzahl der benötigten Düsenelemente maßgeblich und trägt dadurch einer Vereinfachung und Verringerung des Aufstellungsplatzbedarfs von zur Herstellung eines beschriebenen Gebindes 01 geeigneten Herstellungsmitteln 150 bei. Dies ermöglicht Kosteneinsparungen bei der Entwicklung, der Konstruktion, der Montage und dem Betrieb entsprechender Herstellungsmittel 150, letzteres auch wegen des durch eine Verkürzung geringeren Flächenbedarfs für die Aufstellung der Herstellungsmittel 150 und damit der gesamten Vorrichtung 100.

Die Herstellungsmittel 150 können darüber hinaus mindestens ein Zusammenführungsmittel 170 umfassen, um die mit und/oder ohne Klebepunkte 20 versehenen Artikel 03 entsprechend ihrer Anordnung im fertigen Gebinde 01 derart zusammenzuführen, dass zwischen den im fertigen Gebinde 01 durch jeweils mindestens eine Verklebung 02 miteinander unmittelbar verbundenen Artikeln 03 eine entsprechende Verklebung 02 hergestellt wird.

Dies kann dadurch erfolgen, dass im Anschluss an das Aufbringen von Klebepunkten 20 mindestens zwei Artikel 03 zusammengeführt und dabei einander derart angenähert werden, dass der mindestens eine zumindest auf der Mantelfläche eines Artikels 03 aufgebrachte Klebepunkt 20 einen anderen Artikel 03 wenigstens berührt. Das oder die Zusammenführungsmittel 170 sehen daraufhin vor, dass die Artikel 03 für eine gewisse Zeit aneinander gepresst oder aneinander gehalten werden, bis der Klebstoff an der so hergestellten Verklebung 02 zwischen den Artikeln 03 zumindest entsprechend der einleitenden Definition ausgehärtet ist.

Beispielsweise können die Herstellungsmittel 150 erste und zweite sowie gegebenenfalls weitere Zusammenführungsmittel 170 umfassen, um zunächst vermittels erster Zusammenführungsmittel 170 einen eine erste Reihe 04 im fertigen Gebinde 01 bildenden ersten Artikelstrang 30 und einen eine zweite Reihe 04 im fertigen Gebinde 01 bildenden zweiten Artikelstrang 30, deren Artikel 03 zumindest zum Teil mit Klebepunkten 20 versehen sind, entsprechend der Anordnung der Artikel 03 der ersten und der zweiten Reihe 04 im fertigen Gebinde 01 zunächst zu einem Zwischengebinde zusammenzuführen, anschließend an den Klebepunkten 20 gegeneinander zu pressen und dann zumindest bis zum Aushärten des Klebstoffs zu halten. Im Anschluss hieran können zweite Zusammenführungsmittel 170 vorgesehen sein, um ein Zwischengebinde und mindestens einen wenigstens eine weitere Reihe 04 im fertigen Gebinde 01 bildenden weiteren Artikelstrang 30, dessen Artikel 03 - i.e. die Artikel 03 des Zwischengebindes und/oder des mindestens einen weiteren Artikelstrangs 30 - zumindest zum Teil mit Klebepunkten 20 versehen sind, entsprechend der Anordnung der Artikel 03 des Zwischengebindes und der mindestens einen weiteren Reihe 04 im fertigen Gebinde 01 zunächst zu einem weiteren Zwischengebinde oder zum fertigen Gebinde 01 zusammenzuführen, anschließend an den Klebepunkten 20 gegeneinander zu pressen und dann zumindest bis zum Aushärten des Klebstoffs zu halten. Wird hierauf immer noch eine weitere Reihe 04 von Artikeln 03 einem Zwischengebinde zugeführt, können die Herstellungsmittel 150 außerdem dritte, vierte und so weiter Zusammenführungsmittel 170 umfassen, um entsprechend weitere Reihen 04 den immer weiter anwachsenden Zwischengebinden hinzuzufügen.

Die Zusammenführungsmittel 170 können ganz oder teilweise längs einer Transportrichtung F beweglich ausgeführt sein, um ein Zwischengebinde und/oder ein fertiges Gebinde 01 während des Aushärtens des Klebstoffs in Transportrichtung F zu transportieren.

Die Zusammenführungsmittel 170 können beispielsweise mindestens eine Anpresseinheit 171 umfassen, welche die zuvor mit Klebepunkten 20 versehenen Artikel 03 der zu einem fertigen Gebinde 01 oder zu einem Zwischengebinde zusammenzuführenden Artikelstränge 30 oder eines zu einem fertigen Gebinde 01 zusammenzuführenden Zwischengebindes und wenigstens eines weiteren Artikelstrangs 30 gegeneinander presst und zumindest bis zum Aushärten des Klebstoffs gegeneinander hält.

Eine Anpresseinheit 171 kann beispielsweise umlaufende Klemmeinheiten 172 umfassen, welche einzeln und unabhängig voneinander steuerbar sind und somit auch während des Anpressens und Haltens an unterschiedlichen Positionen in Transportrichtung F gesehen gefahren werden können.

Die Klemmeinheiten 171 können zumindest zum Teil als Klammern oder Greifer 112, die an Aktoren 113 und/oder Linearantrieben 126 unabhängig voneinander in Transportrichtung F und/oder quer hierzu beweglich sein können, ausgebildet sein. Hierdurch ist es möglich, während des Aushärtens des Klebstoffs der Klebepunkte 20 der Verklebungen 02 bzw. unmittelbar im Anschluss hieran vermittels der Klammern nacheinander verschiedene Prüfkräfte aufzubringen, beispielsweise zunächst in Transportrichtung F und danach quer hierzu, oder beides gleichzeitig. Auch eine Kombination mit einer zuvor beschriebenen Kippbeanspruchung durch Einbringung eines Moments via zweier unabhängig voneinander steuerbarer und jeweils einen Greifer 112 tragender Aktoren 113, die jedoch am selben Linearantrieb 126 angeordnet sind.

Die Herstellungsmittel 150 können außerdem eine Applikationseinheit zum Applizieren eines Tragegriffs 06 an das fertige Gebinde 01 aufweisen.

Eine mögliche Applikationseinheit zum Applizieren eines Tragegriffs kann oberhalb der Zusammenführungsmittel 170 beispielsweise mittig und gegebenenfalls in Transportrichtung F mitbeweglich angeordnet sein.

Die Herstellungsmittel 150 können außerdem Ausrichtungsmittel umfassen, welche zumindest die mit Klebepunkten 20 versehenen Artikel 03 entsprechend deren zur Herstellung von durch Verklebungen 02 gebildeter unmittelbarer Verbindungen der Artikel 03 untereinander im fertigen Gebinde 01 erforderlichen Orientierung ausrichten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Gebinde
- 02: Verklebung
- 03: Artikel
- 04: Reihe
- 05: Zeile
- 06: Tragegriff
- 07: Unterseite
- 08: Oberseite
- 10: Welle
- 11: konvexe Partie einer Welle 10
- 12: konkave Partie einer Welle 10
- 15: Kante
- 17: Lücke
- 20: Klebepunkt
- 21: obere Verklebung, von den Unterseiten 07 entfernt angeordnet
- 22: untere Verklebung, von den Oberseiten 08 entfernt angeordnet
- 23: mittlere Verklebung
- 30: Artikelstrang
- 31: Artikelstrom
- 100: Vorrichtung
- 101: Prüfmittel
- 110: Krafteinwirkungsmittel
- 111: Einwirkungselement
- 112: Greifer
- 113: Aktor
- 120: Transporteinrichtung
- 121: Bandförderer
- 122: Bewegungsbahn
- 123: Bewegungsbahn
- 124: Abschnitt
- 125: Schiene
- 126: Linearantrieb
- 128: Feder
- 129: Paar durch eine Lücke 17 unterbrochener Transporteinrichtungen 120
- 130: Überwachungsmittel
- 131: Näherungssensor
- 140: Auswertungsmittel
- 141: Weiche
- 142: Sammelbehälter
- 150: Herstellungsmittel
- 160: Bereitstellungsmittel
- 161: Abtrennungsmittel
- 162: Anbringungsmittel
- 163: Düse
- 170: Zusammenführungsmittel
- 171: Anpresseinheit
- 172: Klemmeinheit

- F: Transportrichtung
- A: Anzahl von Artikeln 03 in einem Gebinde 01
- R: Anzahl der Reihen 04 in einem Gebinde 01
- Z: Anzahl der Zeilen 05 in einem Gebinde 01

## Patentansprüche

1. Verfahren zur Prüfung der Verklebungen (02) zwischen den Artikeln (03) eines Gebindes (01) aus in mindestens einer Reihe (04) und/oder mindestens einer Zeile (05) zu mindestens zwei Artikeln (03) unmittelbar miteinander durch Verklebungen (02) verbundenen Artikeln (03), wobei durch mindestens eine Verklebung (02) miteinander verbundene Artikel (03) des Gebindes (01) einzeln und/oder gruppenweise einer Krafteinwirkung in entgegengesetzten Richtungen ausgesetzt werden, wobei die Krafteinwirkung in entgegengesetzten Richtungen durch mindestens ein Kräftepaar erfolgt, von welchem eine erste Kraft auf einen ersten Artikel (03) miteinander durch mindestens eine Verklebung (02) miteinander verbundener Artikel (03) und ein zweite, der ersten Kraft entgegengerichtete Kraft auf einen zweiten Artikel (03) miteinander durch eine Verklebung (02) verbundener Artikel (03) in derart entgegengesetzten Richtungen einwirkt, dass wenigstens eine Verklebung (02) zwischen dem ersten und dem zweiten Artikel (03) eine Zug- und/oder Scherbeanspruchung und/oder eine Momentenbeanspruchung erfährt, und zumindest die Reaktionen derjenigen Artikel (03) des Gebindes (01) auf die Krafteinwirkung überwacht werden, welche jeweils momentan der Krafteinwirkung in entgegengesetzten Richtungen ausgesetzt sind, **dadurch gekennzeichnet, dass** die Krafteinwirkung unter gleichzeitiger Überwachung der Reaktionen zumindest der jeweils der Krafteinwirkung ausgesetzten Artikel (03) während eines Transports eines zuvor durch Herstellung der Verklebungen (02) zwischen seinen Artikeln (03) ganz, im fertigen Zustand frei von einer Umfassung ausgeführte, oder teilweise, im fertigen Zustand mit einer Umfassung ausgeführte, fertiggestellten Gebindes (01) zu einem weiteren Umgang mit dem Gebinde (01) stattfindet.

2. Verfahren nach Anspruch 1, wobei wenn bei der Überwachung festgestellt wird, dass sich die einer Krafteinwirkung ausgesetzten Artikel (03) gleich verhalten, auf eine ordnungsgemäß hergestellte Verklebung (02) rückgeschlossen wird, und wenn bei der Überwachung festgestellt wird, dass sich die einer Krafteinwirkung ausgesetzten Artikel (03) unterschiedlich verhalten, auf eine mangelhaft hergestellte Verklebung (02) rückgeschlossen wird.

3. Verfahren nach Anspruch 1 oder 2, wobei die Krafteinwirkung in entgegengesetzten Richtungen innerhalb durch die Verklebungen (02) bei gewöhnlichem Umgang mit dem Gebinde (01) zu ertragenden Grenzen stattfindet.

4. Verfahren nach einem der Anspruche 1 bis 3, wobei die Krafteinwirkung in entgegengesetzten Richtungen erzeugt wird, indem:
- das ganz, im fertigen Zustand frei von einer Umfassung ausgeführte, oder teilweise, im fertigen Zustand mit einer Umfassung ausgeführte, fertige Gebinde (01) aufrecht stehend mit seiner durch die Unterseiten (07) der Artikel (03) des Gebindes (01) gebildeten Aufstandsfläche über eine konvexe Welle (10, 11) oder Kante (15) bewegt wird, welche zumindest zu einem Zeitpunkt zwischen zwei benachbarten Reihen (04) oder Zeilen (05) des Gebindes (01) verläuft, wobei zwischen den Artikeln (03) der benachbarten Reihen (04) oder Zeilen (05) eine Krafteinwirkung in entgegengesetzten Richtungen erzeugt wird, welche mindestens eine von der Aufstandsfläche entfernt angeordnete Verklebung (02, 21, 23) zwischen miteinander verbundenen Artikeln (03) benachbarter Reihen (04) oder Zeilen (05) einer Zugbelastung aussetzt, und/oder
- das ganz, im fertigen Zustand frei von einer Umfassung ausgeführte, oder teilweise, im fertigen Zustand mit einer Umfassung ausgeführte, fertige Gebinde (01) aufrecht stehend mit seiner durch die Unterseiten (07) der Artikel (03) des Gebindes (01) gebildeten Aufstandsfläche über eine konkave Welle (10, 12) oder Kerbe bewegt wird, welche zumindest zeitweilig zwischen zwei benachbarten Reihen (04) oder Zeilen (05) des Gebindes (01) verläuft, wobei zwischen den Artikeln (03) der benachbarten Reihen (04) oder Zeilen (05) eine Krafteinwirkung in entgegengesetzten Richtungen erzeugt wird, welche mindestens eine zu der Aufstandsfläche benachbarte oder mindestens eine zwischen der Aufstandsfläche und einer von der Aufstandsfläche entfernt angeordneten Verklebung (02, 21, 23) vorgesehene Verklebung (02, 22, 23) zwischen miteinander verbundenen Artikeln (03) benachbarter Reihen (04) oder Zeilen (05) einer Zugbelastung aussetzt, und/oder
- mindestens zwei Artikel (03) zweier unterschiedlicher Reihen (04) oder Zeilen (05) des ganz, im fertigen Zustand frei von einer Umfassung ausgeführte, oder teilweise, im fertigen Zustand mit einer Umfassung ausgeführte, fertigen Gebindes (01) in einem Bereich (B) nahe der durch die Unterseiten (07) der Artikel (03) des Gebindes (01) gebildeten Aufstandsfläche oder in einem Bereich (B) nahe der durch die Oberseiten (08) der Artikel (03) des Gebindes (01) gebildeten Oberfläche des Gebindes (01), in welchem Bereich (B) die Mantelflächen der miteinander durch Verklebungen (02, 21, 22, 23) verbundenen Artikel (03) des Gebindes (01) in der Gebindeanordnung nicht mehr zusammenstoßen, zumindest zeitweilig einer Klemmkraft ausgesetzt werden, wodurch mindestens eine von der Aufstandsfläche oder von der Oberfläche entfernt angeordnete Verklebung (02, 21, 22, 23) zwischen miteinander verbundenen Artikeln (03) benachbarter Reihen (04) oder Zeilen (05) eine Zugbelastung erfährt, und/oder
- das ganz, im fertigen Zustand frei von einer Umfassung ausgeführte, oder teilweise, im fertigen Zustand mit einer Umfassung ausgeführte, fertige Gebinde (01) mit seinen Reihen (04) oder Zeilen (05) auf getrennten Fördermitteln (120) aufstehend transportiert wird, wobei zumindest zwei Fördermittel (120) zumindest abschnittsweise voneinander abweichende Bewegungsbahnen (122, 123) beschreiben oder zumindest abschnittsweise voneinander abweichende Bewegungsgeschwindigkeiten aufweisen, wodurch die Verklebungen (02) zwischen den Artikeln (03) der auf unterschiedlichen Fördermitteln (120) aufstehenden Reihen (04) oder Zeilen (05) des Gebindes (01) jeweils Zug- und/oder Scherbelastungen erfahren, und/oder
- das ganz, im fertigen Zustand frei von einer Umfassung ausgeführte, oder teilweise, im fertigen Zustand mit einer Umfassung ausgeführte, fertige Gebinde (01) über eine Strecke transportiert wird, welche mindestens eine Lücke (17) aufweist, deren Abmessungen zumindest der Erstreckung wenigstens eines Artikels (03) des Gebindes (01) längs und quer zur Transportrichtung (F) entspricht, so dass wenn sich ein oder mehrere Artikel (03) des Gebindes (01) zumindest zeitweilig über der zumindest einen Lücke (17) befinden, die Verklebungen (02) dieser Artikel (03) mit ihren im Gebinde (01) benachbarten Artikeln (03) Scherbelastungen erfahren, und/oder
- zumindest zwei Artikel (03) des ganz, im fertigen Zustand frei von einer Umfassung ausgeführte, oder teilweise, im fertigen Zustand mit einer Umfassung ausgeführte, fertigen Gebindes (01) zumindest zeitweilig mit jeweils einer vorgegebenen Kraft in entgegengesetzten Richtungen gedrückt oder gezogen werden, wodurch die Verklebungen (02) zwischen den Artikeln (03), die in entgegengesetzten Richtungen gedrückt und/oder gezogen werden, jeweils Zug- und/oder Scherbelastungen erfahren.

5. Verfahren nach einem der voranstehenden Ansprüche, wobei die Reaktionen auf die Krafteinwirkung derjenigen Artikel (03) des Gebindes (01), welche jeweils momentan der Krafteinwirkung in entgegengesetzten Richtungen ausgesetzt sind, berührungsfrei überwacht werden.

6. Vorrichtung (100) zur Prüfung der Verklebungen (02) zwischen den Artikeln (03) eines Gebindes (01) aus in mindestens einer Reihe (04) und/oder mindestens einer Zeile zu mindestens zwei Artikeln unmittelbar miteinander durch Verklebungen (02) verbundenen Artikeln (03), umfassend durch Prüfmittel (101), welche nach der Herstellung der Verklebungen (02) der Artikel (03) des Gebindes (01) untereinander wenigstens zwei miteinander durch mindestens eine Verklebung (02) verbundene Artikel (03) einzeln und/oder gruppenweise einer Krafteinwirkung in entgegengesetzten Richtungen aussetzen und die Reaktion der Artikel (03) des Gebindes (01) hierauf überwachen und auswerten, wobei die Prüfmittel (101) Krafteinwirkungsmittel (110) umfassen, welche mindestens ein in entgegengesetzten Richtungen auf zumindest zwei Artikel (03) des Gebindes (01) einwirkendes Kräftepaar erzeugen, von welchem Kräftepaar eine erste Kraft auf einen ersten Artikel (03) miteinander durch eine Verklebung (02) verbundener Artikel (03) und ein zweite, der ersten Kraft entgegengerichtete Kraft auf einen zweiten Artikel (03) miteinander durch eine Verklebung (02) verbundener Artikel (03) in derart entgegengesetzten Richtungen einwirkt, dass wenigstens eine Verklebung (02) zwischen dem ersten und dem zweiten Artikel (03) eine Zug- und/oder Scherbeanspruchung und/oder eine Momentenbeanspruchung erfährt, **dadurch gekennzeichnet, dass** die Krafteinwirkungsmittel (110) zur Krafteinwirkung mindestens eine Transporteinrichtung (120) zum Transport mindestens eines ganz, im fertigen Zustand frei von einer Umfassung ausgeführte, oder teilweise, im fertigen Zustand mit einer Umfassung ausgeführte, fertiggestellten Gebindes (01) beispielsweise zu einem weiteren Umgang mit dem oder den Gebinden (01) umfassen und dass die Krafteinwirkungsmittel (110) zur Krafteinwirkung während des Transports ausgelegt sind.

7. Vorrichtung nach Anspruch 6, wobei die Kräfte, welche die Krafteinwirkungsmittel (110) erzeugen, innerhalb durch die Verklebungen (02) bei gewöhnlichem Umgang mit dem Gebinde (01) zu ertragenden Grenzen liegen, wie sie insbesondere beim Anheben und/oder Verschieben und/oder Absetzen des Gebindes (01) auftreten.

8. Vorrichtung nach Anspruch 6, wobei die Krafteinwirkungsmittel (110):
- eine konvexe Welle (10, 11) oder Kante (15) in mindestens einer Transporteinrichtung (120, 121) umfassen, auf welcher Transporteinrichtung (120, 121) das ganz, im fertigen Zustand frei von einer Umfassung ausgeführte, oder teilweise, im fertigen Zustand mit einer Umfassung ausgeführte, fertige Gebinde (01) aufrecht stehend mit seiner durch die Unterseiten (07) der Artikel (03) des Gebindes (01) gebildeten Aufstandsfläche transportiert und in einer Transportrichtung (F) fortbewegt wird, wobei die konvexe Welle (10, 11) oder Kante (15) dabei derart in der Transporteinrichtung (120, 121) ausgebildet ist, dass das Gebinde (01) die konvexe Welle (10, 11) oder Kante (15) während seines Transports in Transportrichtung (F) so passiert, dass die konvexe Welle (10, 11) oder Kante (15) zumindest zu einem Zeitpunkt zwischen zwei benachbarten Reihen (04) oder Zeilen (05) des Gebindes (01) verläuft; und/oder
- eine konkave Welle (10, 12) oder Kerbe in mindestens einer Transporteinrichtung (120, 121) umfassen, auf welcher Transporteinrichtung (120, 121) das ganz, im fertigen Zustand frei von einer Umfassung ausgeführte, oder teilweise, im fertigen Zustand mit einer Umfassung ausgeführte, fertige Gebinde (01) aufrecht stehend mit seiner durch die Unterseiten (07) der Artikel (03) des Gebindes (01) gebildeten Aufstandsfläche transportiert und in einer Transportrichtung (F) fortbewegt wird, wobei die konkave Welle (10, 12) oder Kerbe dabei derart in der Transporteinrichtung (120, 121) ausgebildet ist, dass das Gebinde (01) die konkave Welle (10, 12) oder Kerbe während seines Transports in Transportrichtung (F) so passiert, dass die konkave Welle (10, 12) oder Kerbe zumindest zeitweilig zwischen zwei benachbarten Reihen (04) oder Zeilen (05) des Gebindes (01) verläuft; und/oder
- zwei oder mehr abschnittsweise parallel verlaufende Transporteinrichtungen (120, 121) umfassen, aufweichen Transporteinrichtungen (120, 121) das ganz, im fertigen Zustand frei von einer Umfassung ausgeführte, oder teilweise, im fertigen Zustand mit einer Umfassung ausgeführte, fertige Gebinde (01) aufrecht stehend mit seiner durch die Unterseiten (07) der Artikel (03) des Gebindes (01) gebildeten Aufstandsfläche transportiert und in einer Transportrichtung (F) fortbewegt wird, wobei je nachdem, ob die Reihen (04) oder die Zeilen (05) des Gebindes (01) parallel zur Transportrichtung (F) orientiert sind, bei parallel zur Transportrichtung (F) orientierten Reihen (04) zumindest zwei Reihen (04), und bei parallel zur Transportrichtung (F) orientierten Zeilen (05) zumindest zwei Zeilen (05) von einer eigenen Transporteinrichtung (120, 121) abgestützt werden, und wobei entlang des Transportwegs Abschnitte (124) vorgesehen sind, in denen der Abstand zwischen den einzelnen Transporteinrichtungen (120, 121) vergrößert ist, so dass die parallelen Transporteinrichtungen (120, 121) abschnittsweise unterschiedliche Bewegungsbahnen (122, 123) aufweisen; und/oder
- zwei oder mehr abschnittsweise parallel verlaufende Transporteinrichtungen (120, 121) umfassen, aufweichen Transporteinrichtungen (120, 121) das ganz, im fertigen Zustand frei von einer Umfassung ausgeführte, oder teilweise, im fertigen Zustand mit einer Umfassung ausgeführte, fertige Gebinde (01) aufrecht stehend mit seiner durch die Unterseiten (07) der Artikel (03) des Gebindes (01) gebildeten Aufstandsfläche transportiert und in einer Transportrichtung (F) fortbewegt wird, wobei je nachdem, ob die Reihen (04) oder die Zeilen (05) des Gebindes (01) parallel zur Transportrichtung (F) orientiert sind, bei parallel zur Transportrichtung (F) orientierten Reihen (04) zumindest zwei Reihen (04), und bei parallel zur Transportrichtung orientierten Zeilen (05) zumindest zwei Zeilen (05) von einer eigenen Transporteinrichtung (120, 121) abgestützt werden, und die Transporteinrichtungen (120, 121) zumindest zeitweilig unterschiedliche Transportgeschwindigkeiten aufweisen; und/oder
- mindestens zwei in einer Transportrichtung (F) hintereinander angeordnete Transporteinrichtungen (120, 121) umfassen, zwischen denen wenigstens eine Lücke (17) ausgebildet ist.

9. Vorrichtung nach einem der Ansprüche 6 bis 8, wobei die Krafteinwirkungsmittel (110):
- mindestens zwei Aktoren (113) umfassen, welche mindestens zwei Artikel (03) zweier unterschiedlicher Reihen (04) oder Zeilen (05) des Gebindes (01) in einem Bereich (B) nahe der durch die Unterseiten (07) der Artikel (03) des Gebindes (01) gebildeten Aufstandsfläche oder in einem Bereich (B) nahe der durch die Oberseiten (08) der Artikel (03) des Gebindes (01) gebildeten Oberfläche des Gebindes (01), in welchem Bereich (B) die Mantelflächen der miteinander durch Verklebungen (02) verbundenen Artikel (03) des Gebindes (01) in der Gebindeanordnung nicht mehr zusammenstoßen, einer Klemmkraft aussetzen; und/oder
- mindestens zwei jeweils mit mindestens einem Artikel (03) in Wechselwirkung bringbare Einwirkungselemente (111) umfassen, welche unabhängig voneinander mit einem Gebinde (01) in Transportrichtung (F) einer Transporteinrichtung (120, 121) beweglich angeordnet sind.

10. Vorrichtung nach einem der Ansprüche 6 bis 9, wobei die Prüfmittel (101) Überwachungsmittel (130) umfassen, welche Ausgangssignale erzeugen, von denen jedes einer durch eine Bewegung und/oder eine Positionsänderung gebildeten Reaktion eines Artikels (03) zumindest derjenigen überwachten Artikel (03) des Gebindes (01) proportional ist, welche momentan der Krafteinwirkung in entgegengesetzten Richtungen ausgesetzt sind.

11. Vorrichtung nach Anspruch 10, wobei die Überwachungsmittel (130) Sensoren oder Einrichtungen umfassen, die durch Kontakt mit den überwachten Artikeln (03) oder berührungsfrei deren Reaktion auf die Krafteinwirkung erfassen.

12. Vorrichtung nach Anspruch 11, wobei die Überwachungsmittel (130):
- einen oder mehrere Kontaktschalter und/oder
- einen oder mehrere Näherungsschalter (131), und/oder
- mindestens eine Videokamera nebst mindestens einen Bilderkennungsalgorithmus ausführende Bilderfassungsmittel, mit welchem Bilderkennungsalgorithmus die einzelnen Artikel des Gebindes und dadurch deren Reaktionen auf die Krafteinwirkung in Echtzeit im erfassten Videobild identifizierbar sind,
umfassen.

13. Vorrichtung nach einem der Ansprüche 6 bis 12, wobei die Prüfmittel (101) mit den Überwachungsmitteln (130) verbundene Auswertungsmittel (140) umfassen, wobei die Auswertungsmittel (140) die Ausgangssignale der Überwachungsmittel (130) empfangen und auswerten und zumindest:
- ein erstes Prüfsignal erzeugen, welches ordnungsgemäß hergestellte Verklebungen (02) zwischen den überwachten Artikeln (03) anzeigt, wenn eine Auswertung der Ausgangssignale ergibt, dass sich die überwachten Artikel (03) gleich verhalten, und
- ein zweites Prüfsignal erzeugen, welches mangelhaft hergestellte Verklebungen (02) zwischen den überwachten Artikeln (03) anzeigt, wenn eine Auswertung der Ausgangssignale ergibt, dass sich die überwachten Artikel (03) unterschiedlich verhalten.

## Claims

1. A method used to test the glued joints (02) between the articles (03) of a bundle (01) of articles (03) connected immediately to each other by glued joints (02) in at least one row (04) and/or in at least one line (05) of at least two articles (03) each, wherein articles (03) of the bundle (01), which articles (03) are connected to each other by at least one glued joint (02), are exposed individually and/or groupwise to an application of force in opposite directions, wherein the application of force in opposite directions is carried out by at least one force couple, by which a first force acts upon a first article (03) of articles (03) connected to each other by at least one glued joint (02), and a second force directed oppositely to the first force acts upon a second article (03) of articles (03) connected to each other by a glued joint (02), said forces acting in suchlike opposite directions that at least one glued joint (02) between the first and the second article (03) undergoes a tensile stress and/or a shear stress and/or a moment stress, and at least the reactions to the application of force of those articles (03) of the bundle (01) that are in each instance momentarily exposed to the application of force in opposite directions are monitored, **characterised in that** the application of force takes place under simultaneous monitoring of the reactions of at least the articles (03) that are in each instance exposed to the application of force during a transport of a bundle (01) to a further handling of the bundle (01), said bundle (01) having been previously completed, by the glued joints (02) between the bundle's (01) articles (03) having been produced, in whole-for bundles (01) designed free of an encompassment in the finished state-or in part-for bundles (01) designed with an encompassment in the finished state.

2. The method according to claim 1, wherein, upon determining during the monitoring that the articles (03) exposed to an application of force react in the same manner, it is concluded that the glued joint (02) has been correctly produced, and, upon determining during the monitoring that the articles (03) exposed to an application of force react differently, it is concluded that the glued joint (02) has been imperfectly produced.

3. The method according to claim 1 or 2, wherein the application of force in opposite directions takes place within the limits to be tolerated by the glued joints (02) during normal handling of the bundle (01).

4. The method according to one of the claims 1 to 3, wherein the application of force in opposite directions is produced by:
- the bundle (01) completed in whole-for bundles (01) designed free of an encompassment in the finished state-or in part-for bundles (01) designed with an encompassment in the finished state-being moved in an upright standing position with its standing surface formed by the undersides (07) of the bundle's (01) articles (03) over a convex curve (10, 11) or edge (15), which at least at one point in time runs between two adjacent rows (04) or lines (05) of the bundle (01), wherein an application of force in opposite directions is produced between the articles (03) of the adjacent rows (04) or lines (05), which application of force exposes at least one glued joint (02, 21, 23) to a tensile load, which glued joint (02, 21, 23) is arranged distant from the standing surface between articles (03) of adjacent rows (04) or lines (05) of articles, which are connected to each other, and/or by
- the bundle (01) completed in whole-for bundles (01) designed free of an encompassment in the finished state-or in part-for bundles (01) designed with an encompassment in the finished state-being moved in an upright standing position with its standing surface formed by the undersides (07) of the bundle's (01) articles (03) over a concave curve (10, 12) or indentation, which at least temporarily runs between two adjacent rows (04) or lines (05) of the bundle (01), wherein an application of force in opposite directions is produced between the articles (03) of the adjacent rows (04) or lines (05), which application of force exposes at least one glued joint (02, 22, 23) to a tensile load, which at least one glued joint (02, 22, 23) is adjacent to the standing surface or which at least one glued joint (02, 22, 23) is provided between the standing surface and a glued joint (02, 21, 23) arranged distant from the standing surface between articles (03) of adjacent rows (04) or lines (05) of articles, which are connected to each other, and/or by
- at least two articles (03) of two different rows (04) or lines (05) of the bundle (01) completed in whole-for bundles (01) designed free of an encompassment in the finished state-or in part-for bundles (01) designed with an encompassment in the finished state-being at least temporarily exposed to a clamping force in an area (B) near the standing surface formed by the undersides (07) of the bundle's (01) articles (03) or in an area (B) near the bundle's (01) upper surface formed by the top sides (08) of the bundle's (01) articles (03), in which area (B) the shell surfaces of the articles (03) of the bundle (01), which articles (03) are connected to each other by glued joints (02, 21, 22, 23), no longer collide in the bundle arrangement, whereby at least one glued joint (02, 21, 22, 23) undergoes a tensile load, which glued joint (02, 21, 22, 23) is arranged distant from the standing surface or from the upper surface between articles (03) of adjacent rows (04) or lines (05) of articles, which are connected to each other, and/or by
- the bundle (01) completed in whole-for bundles (01) designed free of an encompassment in the finished state-or in part-for bundles (01) designed with an encompassment in the finished state-being transported with the bundle's (01) rows (04) or lines (05) standing on separate conveying means (120), wherein at least two conveying means (120) describe paths of movement (122, 123) deviating at least in some sections from each other or have movement speeds deviating at least in some sections from each other, whereby the glued joints (02) between the articles (03) of the bundle's (01) rows (04) or lines (05) standing on different conveying means (120) in each instance undergo tensile loads and/or shear loads, and/or by
- the bundle (01) completed in whole-for bundles (01) designed free of an encompassment in the finished state-or in part-for bundles (01) designed with an encompassment in the finished state-being transported over a path section, which has at least one gap (17), the dimensions of which correspond at least to the extension of at least one article (03) of the bundle (01) longitudinal and transverse to the transport direction (F), such that when one or more articles (03) of the bundle (01) are at least temporarily located above the at least one gap (17), the glued joints (02) of said articles (03) together with their adjacent articles (03) in the bundle (01) undergo shear loads, and/or by
- at least two articles (03) of the bundle (01) completed in whole-for bundles (01) designed free of an encompassment in the finished state-or in part-for bundles (01) designed with an encompassment in the finished state-being at least temporarily pushed or pulled in opposite directions with an in each instance specified force, whereby the glued joints (02) between the articles (03), which are being pushed and/or pulled in opposite directions, in each instance undergo tensile loads and/or shear loads.

5. The method according to one of the previous claims, wherein the reactions to the application of force of those articles (03) of the bundle (01) that are in each instance momentarily exposed to the application of force in opposite directions are monitored in a contact-free manner.

6. An apparatus (100) used to test the glued joints (02) between the articles (03) of a bundle (01) of articles (03) connected immediately to each other by glued joints (02) in at least one row (04) and/or in at least one line (05) of at least two articles (03) each, comprising testing means (101), which, after the glued joints (02) between the articles (03) of the bundle (01) have been produced, expose at least two articles (03) connected to each other by at least one glued joint (02) individually and/or groupwise to an application of force in opposite directions, and monitor and evaluate the reaction of the articles (03) of the bundle (01) hereto, wherein the testing means (101) comprise force-application means (110), which produce at least one force couple acting in opposite directions upon at least two articles (03) of the bundle (01), by which force couple a first force acts upon a first article (03) of articles (03) connected to each other by a glued joint (02), and a second force directed oppositely to the first force acts upon a second article (03) of articles (03) connected to each other by a glued joint (02), said forces acting in suchlike opposite directions that at least one glued joint (02) between the first and the second article (03) undergoes a tensile stress and/or a shear stress and/or a moment stress, **characterised in that** the force-application means (110) used for the force application comprise at least one transport device (120) used for the transport of at least one bundle (01) to, for example, a further handling of the bundle (01) or of the bundles (01), said bundle (01) having been completed in whole-for bundles (01) designed free of an encompassment in the finished state-or in part-for bundles (01) designed with an encompassment in the finished state-and **characterised in that** the force-application means (110) are configured to carry out the application of force during the transport.

7. The apparatus according to claim 6, wherein the forces produced by the force-application means (110) are within the limits to be tolerated by the glued joints (02) during normal handling of the bundle (01), with said forces occurring, in particular, when the bundle (01) is lifted up and/or shifted and/or set down.

8. The apparatus according to claim 6, wherein the force-application means (110):
- comprise a convex curve (10, 11) or edge (15) in at least one transport device (120, 121), on which transport device (120, 121) the bundle (01) completed in whole-for bundles (01) designed free of an encompassment in the finished state-or in part-for bundles (01) designed with an encompassment in the finished state-is transported in an upright standing position with its standing surface formed by the undersides (07) of the bundle's (01) articles (03) and is moved along in a transport direction (F), wherein the convex curve (10, 11) or edge (15) is in this context formed in the transport device (120, 121) in such a manner that the bundle (01) passes the convex curve (10, 11) or edge (15) while being transported in transport direction (F) in such a manner that the convex curve (10, 11) or edge (15) at least at one point in time runs between two adjacent rows (04) or lines (05) of the bundle (01); and/or
- comprise a concave curve (10, 12) or indentation in at least one transport device (120, 121), on which transport device (120, 121) the bundle (01) completed in whole-for bundles (01) designed free of an encompassment in the finished state-or in part-for bundles (01) designed with an encompassment in the finished state-is transported in an upright standing position with its standing surface formed by the undersides (07) of the bundle's (01) articles (03) and is moved along in a transport direction (F), wherein the concave curve (10, 12) or indentation is in this context formed in the transport device (120, 121) in such a manner that the bundle (01) passes the concave curve (10, 12) or indentation while being transported in transport direction (F) in such a manner that the concave curve (10, 12) or indentation at least temporarily runs between two adjacent rows (04) or lines (05) of the bundle (01); and/or
- comprise two or more transport devices (120, 121) running parallel in some sections, on which transport devices (120, 121) the bundle (01) completed in whole-for bundles (01) designed free of an encompassment in the finished state-or in part-for bundles (01) designed with an encompassment in the finished state-is transported in an upright standing position with its standing surface formed by the undersides (07) of the bundle's (01) articles (03) and is moved along in a transport direction (F), wherein, according to whether the rows (04) or the lines (05) of the bundle (01) are oriented parallel to the transport direction (F), at least two rows (04)-if the rows (04) are oriented parallel to the transport direction (F)-or at least two lines (05)-if the lines (05) are oriented parallel to the transport direction (F)-are supported by an own transport device (120, 121), and wherein sections (124) are provided along the transport path, in which sections (124) the distance between the individual transport devices (120, 121) is increased such that the parallel transport devices (120, 121) have different paths of movement (122, 123) in some sections; and/or
- comprise two or more transport devices (120, 121) running parallel in some sections, on which transport devices (120, 121) the bundle (01) completed in whole-for bundles (01) designed free of an encompassment in the finished state-or in part-for bundles (01) designed with an encompassment in the finished state-is transported in an upright standing position with its standing surface formed by the undersides (07) of the bundle's (01) articles (03) and is moved along in a transport direction (F), wherein, according to whether the rows (04) or the lines (05) of the bundle (01) are oriented parallel to the transport direction (F), at least two rows (04)-if the rows (04) are oriented parallel to the transport direction (F)-or at least two lines (05)-if the lines (05) are oriented parallel to the transport direction (F)-are supported by an own transport device (120, 121), and the transport devices (120, 121) at least temporarily have different transport speeds; and/or
- comprise at least two transport devices (120, 121) arranged one after another in transport direction (F) with at least one gap (17) being formed between said transport devices (120, 121).

9. The apparatus according to one of the claims 6 to 8, wherein the force-application means (110):
- comprise at least two actuators (113), which expose at least two articles (03) of two different rows (04) or lines (05) of the bundle (01) to a clamping force in an area (B) near the standing surface formed by the undersides (07) of the bundle's (01) articles (03) or in an area (B) near the bundle's (01) upper surface formed by the top sides (08) of the bundle's (01) articles (03), in which area (B) the shell surfaces of the articles (03) of the bundle (01), which articles (03) are connected to each other by glued joints (02), no longer collide in the bundle arrangement; and/or
- comprise at least two acting elements (111), which are each bringable into interaction with at least one article (03), and which are arranged to be movable independently of one another with a bundle (01) in transport direction (F) of a transport device (120, 121).

10. The apparatus according to one of the claims 6 to 9, wherein the testing means (101) comprise monitoring means (130), which generate output signals, each of which is proportional to a reaction caused by a movement and/or by a position change of an article (03) of at least those monitored articles (03) of the bundle (01) that are momentarily exposed to the application of force in opposite directions.

11. The apparatus according to claim 10, wherein the monitoring means (130) comprise sensors or devices, which, by contact with the monitored articles (03) or in a contact-free manner, capture the reaction of the monitored articles (03) to the application of force.

12. The apparatus according to claim 11, wherein the monitoring means (130) comprise:
- one or more contact switches and/or
- one or more proximity switches (131), and/or
- at least one video camera along with image acquisition means executing at least one image recognition algorithm, with which image recognition algorithm the individual articles of the bundle and thereby their reactions to the application of force are identifiable in real time in the captured video image.

13. The apparatus according to one of the claims 6 to 12, wherein the testing means (101) comprise evaluation means (140), which are connected with the monitoring means (130), wherein the evaluation means (140) receive and evaluate the output signals of the monitoring means (130) and at least:
- generate a first test signal, which indicates correctly produced glued joints (02) between the monitored articles (03) if an evaluation of the output signals has the result that the monitored articles (03) react in the same manner, and
- generate a second test signal, which indicates imperfectly produced glued joints (02) between the monitored articles (03) if an evaluation of the output signals has the result that the monitored articles (03) react differently.

## Revendications

1. Procédé de contrôle des liaisons adhésives (02) entre les articles (03) d'un multipack (01) se composant d'articles (03) qui sont reliés directement les uns aux autres par des liaisons adhésives (02), en au moins une rangée (04) et/ou au moins une ligne (05), pour obtenir au moins deux articles (03), dans lequel des articles (03) du multipack (01) reliés les uns aux autres par au moins une liaison adhésive (02) sont exposés individuellement et/ou par groupes à une action de force dans des directions opposées, l'action de force dans des directions opposées se faisant par au moins un couple de forces dont une première force agit sur un premier article (03) d'articles (03) reliés les uns aux autres par au moins une liaison adhésive (02) et une deuxième force qui est opposée à la première force agit sur un deuxième article (03) d'articles (03) reliés les uns aux autres par une liaison adhésive (02), dans des directions tellement opposées qu'au moins une liaison adhésive (02) entre le premier et le deuxième article (03) subit une contrainte de traction et/ou de cisaillement et/ou une contrainte de moment, et au moins les réactions des articles (03) du multipack (01) à l'action de force qui sont chacun exposés momentanément à l'action de force dans des directions opposées sont surveillées, **caractérisé par le fait que** l'action de force se fait tout en surveillant les réactions au moins des articles (03) exposés respectivement à l'action de force, lors d'un transport d'un multipack (01) fini auparavant soit complètement, exempt d'une enveloppe à l'état fini, soit partiellement, muni d'une enveloppe à l'état fini, en réalisant les liaisons adhésives (02) entre ses articles (03), pour une manipulation ultérieure du multipack (01).

2. Procédé selon la revendication 1, dans lequel, s'il est déterminé lors de la surveillance que les articles (03) exposés à une action de force se comportent de la même manière, on peut conclure à une liaison adhésive (02) réalisée correctement, et, s'il est déterminé lors de la surveillance que les articles (03) exposés à une action de force se comportent différemment, on peut conclure à une liaison adhésive (02) réalisée de manière inexacte.

3. Procédé selon la revendication 1 ou 2, dans lequel l'action de force dans des directions opposées se fait dans des limites à supporter par les liaisons adhésives (02) lors d'une manipulation normale du multipack (01).

4. Procédé selon l'une quelconque des revendications 1 à 3, dans lequel l'action de force dans des directions opposées est générée par le fait que
- le multipack (01) fini soit complètement, exempt d'une enveloppe à l'état fini, soit partiellement, muni d'une enveloppe à l'état fini, est déplacé debout par sa surface d'appui formée par les faces inférieures (07) des articles (03) du multipack (01), sur une onde convexe (10, 11) ou une arête (15) qui s'étend, au moins à un moment donné, entre deux rangées (04) ou lignes (05) adjacentes du multipack (01), dans lequel une action de force dans des directions opposées est générée entre les articles (03) des rangées (04) ou lignes (05) adjacentes, laquelle fait exposer, à une contrainte de traction, au moins une liaison adhésive (02, 21, 23) entre des articles (03) reliés entre eux de rangées (04) ou lignes (05) adjacentes, qui est éloignée de la surface d'appui, et/ou
- le multipack (01) fini soit complètement, exempt d'une enveloppe à l'état fini, soit partiellement, muni d'une enveloppe à l'état fini, est déplacé debout par sa surface d'appui formée par les faces inférieures (07) des articles (03) du multipack (01), sur une onde concave (10, 12) ou une encoche qui s'étend, au moins temporairement, entre deux rangées (04) ou lignes (05) adjacentes du multipack (01), dans lequel une action de force dans des directions opposées est générée entre les articles (03) des rangées (04) ou lignes (05) adjacentes, laquelle fait exposer, à une contrainte de traction, au moins une liaison adhésive (02, 22, 23) entre des articles (03) reliés entre eux de rangées (04) ou lignes (05) adjacentes, qui est adjacente à la surface d'appui ou au moins une liaison adhésive (02, 22, 23) qui est prévue entre la surface d'appui et une liaison adhésive (02, 21, 23) éloignée de la surface d'appui, et/ou
- au moins deux articles (03) de deux rangées (04) ou lignes (05) différentes du multipack (01) fini soit complètement, exempt d'une enveloppe à l'état fini, soit partiellement, muni d'une enveloppe à l'état fini, sont exposés au moins temporairement à une force de serrage dans une zone (B) proche de la surface d'appui formée par les faces inférieures (07) des articles (03) du multipack (01) ou dans une zone (B) proche de la surface du multipack (01) formée par les faces supérieures (08) des articles (03) du multipack (01); dans laquelle zone (B), les surfaces latérales des articles (03) du multipack (01) reliés entre eux par des liaisons adhésives (02, 21, 22, 23) ne se heurtent plus dans l'agencement de multipack; ce par quoi au moins une liaison adhésive (02, 21, 22, 23) entre des articles (03) reliés entre eux de rangées (04) ou lignes (05) adjacentes, qui est éloignée de la surface d'appui ou de la surface, subit une contrainte de traction, et/ou
- le multipack (01) fini soit complètement, exempt d'une enveloppe à l'état fini, soit partiellement, muni d'une enveloppe à l'état fini, avec ses rangées (04) ou lignes (05) est transporté debout sur des moyens de transport (120) séparés, dans lequel au moins deux moyens de transport (120) décrivent des trajets de déplacement (122, 123) qui diffèrent l'un de l'autre au moins par sections ou présentent des vitesses de déplacement qui diffèrent l'une de l'autre au moins par sections, ce par quoi les liaisons adhésives (02) entre les articles (03) des rangées (04) ou lignes (05) du multipack (01) qui reposent sur différents moyens de transport (120) subissent chacune des contraintes de traction et/ou de cisaillement, et/ou
- le multipack (01) fini soit complètement, exempt d'une enveloppe à l'état fini, soit partiellement, muni d'une enveloppe à l'état fini, est transporté sur un trajet qui présente au moins une lacune (17) dont les dimensions correspondent au moins à l'extension d'au moins d'un article (03) du multipack (01) longitudinalement et transversalement à la direction de transport (F) de sorte que, lorsqu'un ou plusieurs articles (03) du multipack (01) se trouvent au moins temporairement sur ladite au moins une lacune (17), les liaisons adhésives (02) de ces articles (03) subissent des contraintes de cisaillement avec leurs articles (03) voisins dans le multipack (01), et/ou
- au moins deux articles (03) du multipack (01) fini soit complètement, exempt d'une enveloppe à l'état fini, soit partiellement, muni d'une enveloppe à l'état fini, sont pressés ou tirés au moins temporairement, chacun avec une force prédéterminée, dans des directions opposées, ce par quoi les liaisons adhésives (02) entre les articles (03) qui sont pressés et/ou tirés dans des directions opposées subissent chacune des contraintes de traction et/ou de cisaillement.

5. Procédé selon l'une quelconque des revendications précédentes, dans lequel les réactions à l'action de force des articles (03) du multipack (01) qui sont exposés respectivement momentanément à l'action de force dans des directions opposées sont surveillées sans contact.

6. Dispositif (100) de contrôle des liaisons adhésives (02) entre les articles (03) d'un multipack (01) se composant d'articles (03) qui sont reliés directement les uns aux autres par des liaisons adhésives (02), en au moins une rangée (04) et/ou au moins une ligne (05), pour obtenir au moins deux articles (03), comprenant des moyens de contrôle (101) qui, après la réalisation des liaisons adhésives (02) des articles (03) entre eux du multipack (01), font exposer individuellement et/ou par groupes au moins deux articles (03) reliés entre eux par au moins une liaison adhésive (02) à une action de force dans des directions opposées et surveillent et évaluent la réaction à celle-ci des articles (03) du multipack (01), dans lequel lesdits moyens de contrôle (101) comprennent des moyens d'application de force (110) qui génèrent au moins un couple de forces qui agit dans des directions opposées sur au moins deux articles (03) du multipack (01), une première force dudit couple de forces agit sur un premier article (03) d'articles (03) reliés les uns aux autres par une liaison adhésive (02) et une deuxième force de celui-ci qui est opposée à la première force agit sur un deuxième article (03) d'articles (03) reliés les uns aux autres par une liaison adhésive (02), dans des directions tellement opposées qu'au moins une liaison adhésive (02) entre le premier et le deuxième article (03) subit une contrainte de traction et/ou de cisaillement et/ou une contrainte de moment, **caractérise par le fait que**, pour appliquer une force, les moyens d'application de force (110) comprennent au moins un dispositif de transport (120) pour transporter au moins un multipack (01) fini soit complètement, exempt d'une enveloppe à l'état fini, soit partiellement, muni d'une enveloppe à l'état fini, par exemple pour une manipulation ultérieure du ou des multipacks (01) et que les moyens d'application de force (110) sont conçus pour appliquer une force pendant le transport.

7. Dispositif selon la revendication 6, dans lequel les forces générées par les moyens d'application de force (110) se situent dans des limites à supporter par les liaisons adhésives (02) lors d'une manipulation normale du multipack (01), telles qu'elles se produisent en particulier lorsque le multipack (01) est levé et/ou déplacé et/ou déposé.

8. Dispositif selon la revendication 6, dans lequel les moyens d'application de force (110):
- comprennent une onde convexe (10, 11) ou arête (15) dans au moins un dispositif de transport (120, 121); sur lequel dispositif de transport (120, 121), le multipack (01) fini soit complètement, exempt d'une enveloppe à l'état fini, soit partiellement, muni d'une enveloppe à l'état fini, est transporté debout par sa surface d'appui formée par les faces inférieures (07) des articles (03) du multipack (01), et est déplacé dans une direction de transport (F), dans lequel l'onde convexe (10, 11) ou l'arête (15) est réalisée dans le dispositif de transport (120, 121) de telle sorte que le multipack (01) passe par l'onde convexe (10, 11) ou l'arête (15), pendant son transport dans la direction de transport (F), de telle manière que l'onde convexe (10, 11) ou l'arête (15) s'étend, au moins à un moment donné, entre deux rangées (04) ou lignes (05) adjacentes du multipack (01); et ou
- comprennent une onde concave (10, 12) ou encoche dans au moins un dispositif de transport (120, 121); sur lequel dispositif de transport (120, 121), le multipack (01) fini soit complètement, exempt d'une enveloppe à l'état fini, soit partiellement, muni d'une enveloppe à l'état fini, est transporté debout par sa surface d'appui formée par les faces inférieures (07) des articles (03) du multipack (01), et est déplacé dans une direction de transport (F), dans lequel l'onde concave (10, 12) ou l'encoche est réalisée dans le dispositif de transport (120, 121) de telle sorte que le multipack (01) passe par l'onde concave (10, 12) ou l'encoche, pendant son transport dans la direction de transport (F), de telle manière que l'onde concave (10, 12) ou l'encoche s'étend, au moins temporairement, entre deux rangées (04) ou lignes (05) adjacentes du multipack (01); et ou
- comprennent deux ou plusieurs dispositifs de transport (120, 121) s'étendant par sections parallèlement; sur lesquels dispositifs de transport (120, 121), le multipack (01) fini soit complètement, exempt d'une enveloppe à l'état fini, soit partiellement, muni d'une enveloppe à l'état fini, est transporté debout par sa surface d'appui formée par les faces inférieures (07) des articles (03) du multipack (01), et est déplacé dans une direction de transport (F), dans lequel, selon que les rangées (04) ou les lignes (05) du multipack (01) sont orientées parallèlement à la direction de transport (F), au moins deux rangées (04) sont supportées par un propre dispositif de transport (120, 121) lorsque les rangées (04) sont orientées parallèlement à la direction de transport (F) et au moins deux lignes (05) sont supportées par un propre dispositif de transport (120, 121) lorsque les lignes (05) sont orientées parallèlement à la direction de transport (F), et dans lequel des sections (124) sont prévues le long du chemin de transport, dans lesquelles la distance séparant les dispositifs de transport (120, 121) individuels est agrandie de sorte que les dispositifs de transport (120, 121) parallèles présentent des trajets de déplacement (122, 123) différents par sections; et ou
- comprennent deux ou plusieurs dispositifs de transport (120, 121) s'étendant par sections parallèlement; sur lesquels dispositifs de transport (120, 121), le multipack (01) fini soit complètement, exempt d'une enveloppe à l'état fini, soit partiellement, muni d'une enveloppe à l'état fini, est transporté debout par sa surface d'appui formée par les faces inférieures (07) des articles (03) du multipack (01), et est déplacé dans une direction de transport (F), dans lequel, selon que les rangées (04) ou les lignes (05) du multipack (01) sont orientées parallèlement à la direction de transport (F), au moins deux rangées (04) sont supportées par un propre dispositif de transport (120, 121) lorsque les rangées (04) sont orientées parallèlement à la direction de transport (F) et au moins deux lignes (05) sont supportées par un propre dispositif de transport (120, 121) lorsque les lignes (05) sont orientées parallèlement à la direction de transport, et les dispositifs de transport (120, 121) présentent au moins temporairement des vitesses de transport différentes; et/ou
- comprennent au moins deux dispositifs de transport (120, 121) qui sont disposés les uns derrière les autres dans une direction de transport (F) et entre lesquels est réalisée au moins une lacune (17).

9. Dispositif selon l'une quelconque des revendications 6 à 8, dans lequel les moyens d'application de force (110):
- comprennent au moins deux actionneurs (113) qui font exposer au moins deux articles (03) de deux rangées (04) ou lignes (05) différentes du multipack (01), à une force de serrage dans une zone (B) proche de la surface d'appui formée par les faces inférieures (07) des articles (03) du multipack (01) ou dans une zone (B) proche de la surface du multipack (01) formée par les faces supérieures (08) des articles (03) du multipack (01); dans laquelle zone (B), les surfaces latérales des articles (03) du multipack (01) reliés entre eux par des liaisons adhésives (02) ne se heurtent plus dans l'agencement de multipack; et/ou
- comprennent au moins deux éléments d'action (111) qui peuvent chacun être mis en interaction avec au moins un article (03) et qui sont agencés pour être mobiles indépendamment l'un de l'autre avec un multipack (01) dans la direction de transport (F) d'un dispositif de transport (120, 121).

10. Dispositif selon l'une quelconque des revendications 6 à 9, dans lequel les moyens de contrôle (101) comprennent des moyens de surveillance (130) qui génèrent des signaux de sortie dont chacun est proportionnel à une réaction d'un article (03), formée par un mouvement et/ou un changement de position, au moins des articles (03) surveillés du multipack (01) qui sont exposés momentanément à l'action de force dans des directions opposées.

11. Dispositif selon la revendication 10, dans lequel les moyens de surveillance (130) comprennent des capteurs ou dispositifs qui détectent soit par contact avec les articles (03) surveillés soit sans contact la réaction de ceux-ci à l'action de force.

12. Dispositif selon la revendication 11, dans lequel les moyens de surveillance (130) comprennent:
- un ou plusieurs interrupteurs de contact et/ou
- un ou plusieurs interrupteurs de proximité (131), et/ou
- au moins une caméra vidéo outre des moyens d'acquisition d'image exécutant au moins un algorithme de reconnaissance d'image; avec lequel algorithme de reconnaissance d'image, les articles individuels du multipack et ainsi leurs réactions à l'action de force peuvent être identifiés en temps réel dans l'image vidéo acquise.

13. Dispositif selon l'une quelconque des revendications 6 à 12, dans lequel les moyens de contrôle (101) comprennent des moyens d'évaluation (140) connectés aux moyens de surveillance (130), les moyens d'évaluation (140) recevant et évaluant les signaux de sortie des moyens de surveillance (130) et, au moins,
- génèrent un premier signal de contrôle qui indique des liaisons adhésives (02) réalisées correctement entre les articles (03) surveillés, lorsqu'il résulte d'une évaluation des signaux de sortie que les articles (03) surveillés se comportent de la même manière, et
- génèrent un deuxième signal de contrôle qui indique des liaisons adhésives (02) réalisées de manière inexacte entre les articles (03) surveillés, lorsqu'il résulte d'une évaluation des signaux de sortie que les articles (03) surveillés se comportent d'une manière différente.
